# EUROPEAN PATENT APPLICATION

(11) **EP 3 843 458 A1**
(43) Date of publication of application: **30.06.2021**
(21) Application number: 19861777.1
(22) Date of filing: 10.09.2019
(51) Int. Cl.: H04W 36/08

(54) **METHOD AND APPARATUS FOR SELECTING NETWORK ELEMENT**

(30) Priority: 17.09.2018 CN 201811082134
(71) Applicant: HUAWEI TECHNOLOGIES CO., LTD., Shenzhen, Guangdong 518129 (CN)
(72) Inventor: CAO, Longyu, Shenzhen, Guangdong 518129 (CN); YU, Yijun, Shenzhen, Guangdong 518129 (CN)
(74) Representative: Isarpatent
(86) International application number: PCT/CN2019/105200
(87) International publication number: WO 2020/057401

(57) **Abstract**

A network element selection method and an apparatus are provided, to resolve a prior-art problem that network function selection is not flexible. In the method, a first network element obtains first information of an access network element, and obtains second information, where the first information is used to indicate a resource configuration level of the access network element, and the second information includes one or more of first priority information, second priority information, or third priority information. The first priority information is used to indicate a priority of a terminal device, the second priority information is used to indicate a service priority, and the third priority information is used to indicate a subscriber priority. The first network element determines, based on the first information and the second information, the access network element to provide a service for the terminal device. According to the foregoing method, the first network element may select the access network element whose resource configuration level matches the second information (priority information), to provide a service for the terminal device. In this way, selection of the access network element is relatively flexible, so that a user requirement can be better met, thereby improving user experience.

## Description

This application claims priority to Chinese Patent Application No. 201811082134.7, filed with the Chinese Patent Office on September 17, 2018 and entitled "NETWORK ELEMENT SELECTION METHOD AND APPARATUS", which is incorporated herein by reference in its entirety.

### TECHNICAL FIELD

This application relates to the field of communications technologies, and in particular, to a network element selection method and an apparatus.

### BACKGROUND

A 5th generation (5th generation, 5G) network has supported cloudification/virtualization (Cloud RAN) of some network functions (including radio resource control (radio resource control, RRC) and service data adaptation protocol (service data adaptation protocol, SDAP)/packet data convergence protocol (packet data convergence protocol, PDCP) functions) of a 5G radio access network centralized unit (5G (radio access network, RAN) (central unit, CU)), that is, a virtual machine (virtual machine, VM) or a container is created on a general-purpose hardware server, and a wireless network function is loaded to the corresponding VM or container, to provide a network function service for a user. For example, in a cloud RAN deployment process, a plurality of virtualization function instances are deployed for a same service function (for example, RRC or SDAP/PDCP), and resource specifications of VMs or containers deployed for these virtualization function instances are different. A resource specification configuration of a network function instance deployed on a server in a universal resource pool is relatively common, and a resource configuration of a network function instance deployed in an accelerated resource pool is relatively high.

A plurality of network function instances are deployed for a same network function in a network, and resource configurations of the plurality of network function instances having the same network function are not totally the same. Therefore, operating capabilities are also different. When a terminal device accesses a network, a corresponding network function instance needs to be selected for the terminal device to provide an access service. Currently, when a network function instance is being selected, only information such as load and a service area of the network function instance is considered. For example, a network function instance close to the terminal device and having light load is selected to provide a service for the terminal device. However, in practice, because different terminal devices have different resource requirements, the network function instance selected by using the foregoing method may not meet a user requirement, thereby affecting user experience.

In view of the above, a user requirement may not be met because an existing network function selection method is not flexible, thereby compromising user experience.

### SUMMARY

This application provides a network element selection method and an apparatus, to resolve a problem that a user requirement may not be met because a network function selection method in the current technology is not flexible, thereby compromising user experience.

According to a first aspect, this application provides a network element selection method, and the method includes:
A first network element obtains first information of an access network element, obtains second information, and determines, based on the first information and the second information, the access network element to provide a service for a terminal device, where the first information is used to indicate a resource configuration level of the access network element, the second information includes one or more of first priority information, second priority information, or third priority information, the first priority information is used to indicate a priority of the terminal device, the second priority information is used to indicate a service priority, and the third priority information is used to indicate a subscriber priority.

According to the foregoing method, the first network element may select the access network element whose resource configuration level matches the second information (priority information) to provide a service for the terminal device. In this way, selection of the access network element is relatively flexible, so that a user requirement can be better met and user experience can be improved.

In a possible design, the access network element is one or more of a packet data convergence protocol control plane function network element, a service data adaptation protocol/packet data convergence protocol user plane function network element, or a radio resource control network element. In this way, a proper access network element can be flexibly selected subsequently based on an actual requirement of the terminal device to provide a service for the terminal device.

In a possible design, that a first network element obtains second information may be: The first network element receives the first priority information from a first radio resource control network element. In this way, the first network element can accurately obtain the second information.

In a possible design, that a first network element determines, based on the first information and the second information, the access network element to provide a service for a terminal device may be: If the first priority information is a high priority, and the first information indicates that resource configuration levels of a first packet data convergence protocol control plane function network element and a second radio resource control network element are high, the first network element determines the first packet data convergence protocol control plane function network element and the second radio resource control network element to each provide a service for the terminal device.

According to the foregoing method, when the first priority information is a high priority, the first network element may select an access network element that is of a high resource configuration level and that matches the high priority to provide a service for the terminal device.

In a possible design, the first network element sends an identifier of the first packet data convergence protocol control plane function network element, an identifier of the second radio resource control network element, and redirection indication information to the first radio resource control network element, where the redirection indication information is used to indicate the first radio resource control network element to send the identifier of the first packet data convergence protocol control plane function network element and a radio resource control connection setup request of the terminal device to the second radio resource control network element; or the first network element receives a radio resource control connection request of the terminal device from the first radio resource control network element, and then the first network element sends an identifier of the first packet data convergence protocol control plane function network element and the radio resource control connection request of the terminal device to the second radio resource control network element.

According to the foregoing method, an access network element newly selected by the first network element may subsequently provide a service for the terminal device, thereby meeting a user requirement.

In a possible design, the first network element may obtain the second information by using the following two methods: The first network element obtains the third priority information from a unified data management function network element; or the first network element obtains the third priority information from an access and mobility management function network element. In this case, in a possible design, the third priority information may be obtained by the access and mobility management function network element from the unified data management function network element.

According to the foregoing method, the first network element can flexibly obtain the second information.

In a possible design, that a first network element determines, based on the first information and the second information, the access network element to provide a service for a terminal device may be: If the third priority information is a high subscriber priority, and the first information indicates that resource configuration levels of a second packet data convergence protocol control plane function network element and a third radio resource control network element are high, the first network element determines the second packet data convergence protocol control plane function network element and the third radio resource control network element to each provide a service for the terminal device.

According to the foregoing method, the first network element may select an access network element matching the high subscriber priority to provide a service for the terminal device, thereby meeting a requirement of the terminal device and improving user experience.

In a possible design, the first network element sends handover indication information to a fourth radio resource control network element, where the handover indication information is used to indicate the fourth radio resource control network element to initiate a handover request. Then, the first network element sends an identifier of the second packet data convergence protocol control plane function network element to the third radio resource control network element after receiving first handover request information from the fourth radio resource control network element, so that the third radio resource control network element creates a radio resource control context of the terminal device, and sends a context setup request of the terminal device to the second packet data convergence protocol control plane function network element.

According to the foregoing method, a context of the terminal device may be subsequently transferred to an access network element newly selected by the first network element, so that the newly selected access network element provides a service for the terminal device, thereby meeting a user requirement.

In a possible design, the first network element receives handover acknowledgment information from the third radio resource control network element after the first network element sends the identifier of the second packet data convergence protocol control plane function network element to the third radio resource control network element, where the handover acknowledgment information is sent after the third radio resource control network element receives a context setup response from the second packet data convergence protocol control plane function network element, and the context setup response is sent after the second packet data convergence protocol control plane function network element modifies a context of the terminal device on an access network distributed unit. Then, the first network element sends radio resource control reconfiguration request information to the terminal device by using the fourth radio resource control network element and a third packet data convergence protocol control plane function network element, so that a context of the terminal device on the third radio resource control network element is updated to the terminal device.

According to the foregoing method, a context of the terminal device can be updated, so that an access network element newly selected by the first network element subsequently provides a service for the terminal device.

In a possible design, the first network element sends cause information to the terminal device by using a fifth radio resource control network element and a fourth packet data convergence protocol control plane function network element, where the cause information is used to indicate the terminal device to resend a radio resource control connection request that carries a high subscriber priority.

According to the foregoing method, the terminal device may re-initiate a radio resource control connection procedure, and select, in the radio resource control connection procedure, an access network element matching the high subscriber priority to provide a service for the terminal device, thereby meeting a user requirement and improving user experience.

In a possible design, that a first network element obtains second information may be: The first network element receives the second priority information from an access and mobility management function network element. In this way, the first network element can accurately obtain the second information.

In a possible design, that a first network element determines, based on the first information and the second information, the access network element to provide a service for a terminal device may be: If the second priority information is a high service priority, and the first information indicates that a resource configuration level of a first service data adaptation protocol/packet data convergence protocol user plane function network element is high, the first network element determines the first service data adaptation protocol/packet data convergence protocol user plane function network element to provide a service for the terminal device.

According to the foregoing method, the first network element may select an access network element matching the high service priority to provide a service for the terminal device, thereby meeting a requirement of the terminal device and improving user experience.

In a possible design, that a first network element obtains second information may be: The first network element obtains the first priority information or the third priority information from the first network element. In this way, the first network element may obtain the second information locally stored by the first network element, to subsequently select an access network element.

In a possible design, that a first network element determines, based on the first information and the second information, the access network element to provide a service for a terminal device may be: If the first priority information is a high priority, and the first information indicates that a resource configuration level of a second service data adaptation protocol/packet data convergence protocol user plane function network element is high, the first network element determines the second service data adaptation protocol/packet data convergence protocol user plane function network element to provide a service for the terminal device; or if the third priority information is a high subscriber priority, and the first information indicates that a resource configuration level of a third service data adaptation protocol/packet data convergence protocol user plane function network element is high, the first network element determines the third service data adaptation protocol/packet data convergence protocol user plane function network element to provide a service for the terminal device.

According to the foregoing method, the first network element may select an access network element matching the high priority or the high subscriber priority to provide a service for the terminal device, thereby meeting a requirement of the terminal device and improving user experience.

In a possible design, the first network element sends an identifier of a determined service data adaptation protocol/packet data convergence protocol user plane function network element to a sixth radio resource control network element. In this way, the sixth radio resource control network element may subsequently send packet data unit session resource setup request information to a fifth packet data convergence protocol control plane function network element, so that the fifth packet data convergence protocol control plane function network element sends bearer context setup information to a fourth service data adaptation protocol/packet data convergence protocol user plane function network element. The packet data unit session resource setup request information includes the identifier of the determined service data adaptation protocol/packet data convergence protocol user plane function network element, and the fourth service data adaptation protocol/packet data convergence protocol user plane function network element is one of determined service data adaptation protocol/packet data convergence protocol user plane function network elements.

According to the foregoing method, an access network element newly selected by the first network element may provide a service for the terminal device, thereby meeting a user requirement.

In a possible design, that a first network element obtains second information may be: The first network element determines an identifier of a target cell to which the terminal device is to be handed over, and obtains target priority information from the first network element based on the identifier of the target cell, where the target priority information is the first priority information, the second priority information, or the third priority information.

According to the foregoing method, the first network element can accurately obtain the second information.

In a possible design, that a first network element determines, based on the first information and the second information, the access network element to provide a service for a terminal device may be: The first network element determines, based on the first information and the second information, a sixth packet data convergence protocol control plane function network element, a fifth service data adaptation protocol/packet data convergence protocol user plane function network element, and a seventh radio resource control network element to each provide a service for the terminal device.

According to the foregoing method, the first network element may select, for the terminal device, an access network element that meets a requirement, thereby improving user experience.

In a possible design, that a first network element obtains second information may be: The first network element obtains the first priority information from an access and mobility management function network element. In this way, the first network element can accurately obtain the second information.

In a possible design, that a first network element determines, based on the first information and the second information, the access network element to provide a service for the terminal device may be: The first network element determines, based on the first information and the second information, a seventh packet data convergence protocol control plane function network element and an eighth radio resource control network element to each provide a service for the terminal device.

According to the foregoing method, the first network element may select, for the terminal device, an access network element that meets a requirement, thereby improving user experience.

In a possible design, the first network element sends an identifier of the seventh packet data convergence protocol control plane function network element to the eighth radio resource control network element, so that the eighth radio resource control network element sends paging information to the terminal device by using the seventh packet data convergence protocol control plane function network element.

According to the foregoing method, an access network element that meets a user requirement and that is selected by the first network element may provide a service for the terminal device, thereby improving user experience.

According to a second aspect, this application provides a network element selection method, and the method includes:
An access network element registers first information with a first network element after determining the first network element, where the first information is used to indicate a resource configuration level of the access network element.

According to the foregoing method, the access network element may register the first information with the first network element, so that the first network element obtains the resource configuration level of the access network element, and subsequently the first network element may select an access network element with a proper resource configuration level to provide a service for a terminal device.

In a possible design, the access network element is one or more of a packet data convergence protocol control plane function network element, a service data adaptation protocol/packet data convergence protocol user plane function network element, or a radio resource control network element. In this way, a proper access network element can be flexibly selected subsequently based on an actual requirement of the terminal device to provide a service for the terminal device.

In a possible design, when the access network element is a second radio resource control network element, the second radio resource control network element receives an identifier of a first packet data convergence protocol control plane function network element and a radio resource control connection setup request of a terminal device from a first radio resource control network element, where a resource configuration level of the second radio resource control network element is high, and the second radio resource control network element provides a service for the terminal device. For example, the second radio resource control network element may be a second radio resource control network element in a specific implementation, and the first packet data convergence protocol control plane function network element may be a first packet data convergence protocol control plane function network element in a specific implementation.

According to the foregoing method, an access network element newly selected by the first network element may subsequently provide a service for the terminal device, thereby meeting a user requirement.

According to a third aspect, this application provides a network element selection method, and the method includes:
A first radio resource control network element reports (in other words, sends) first priority information to a first network element after obtaining a radio resource control connection setup request of a terminal device, where the first priority information is used to indicate a priority of the terminal device. For example, the first radio resource control network element may be a first radio resource control network element in a specific implementation.

According to the foregoing method, the first radio resource control network element may report the first priority information to the first network element, so that the first network element subsequently selects an access network element matching the first priority information to provide a service for the terminal device.

In a possible design, when the first priority information is a high priority, the first radio resource control network element may receive an identifier of a first packet data convergence protocol control plane function network element, an identifier of a second radio resource control network element, and redirection indication information from the first network element, where the redirection indication information is used to indicate the first radio resource control network element to send the identifier of the first packet data convergence protocol control plane function network element and the radio resource control connection setup request of the terminal device to the second radio resource control network element. Then, the first radio resource control network element sends the identifier of the first packet data convergence protocol control plane function network element and the radio resource control connection setup request of the terminal device to the second radio resource control network element. For example, if resource configuration levels of the first packet data convergence protocol control plane function network element and the second radio resource control network element are high, the first packet data convergence protocol control plane function network element and the second radio resource control network element provide a service for the terminal device. For example, the first packet data convergence protocol control plane function network element may be a first packet data convergence protocol control plane function network element in a specific implementation, and the second radio resource control network element may be a second radio resource control network element in a specific implementation.

According to the foregoing method, an access network element newly selected by the first network element may subsequently provide a service for the terminal device, thereby meeting a user requirement.

In a possible design, when the first priority information is a high priority, the first radio resource control network element sends a radio resource control connection setup request of the terminal device to the first network element, so that the first network element sends an identifier of a first packet data convergence protocol control plane function network element and the radio resource control connection request of the terminal device to a second radio resource control network element. For example, if a resource configuration level of the first packet data convergence protocol control plane function network element is high, the first packet data convergence protocol control plane function network element provides a service for the terminal device.

According to the foregoing method, an access network element newly selected by the first network element may subsequently provide a service for the terminal device, thereby meeting a user requirement.

According to a fourth aspect, this application provides a network element selection method, and the method includes:
A first radio resource control network element receives handover indication information from a first network element, where the handover indication information is used to indicate the first radio resource control network element to initiate a handover request. Then, the first radio resource control network element sends first handover request information to the first network element, so that the first network element sends an identifier of a packet data convergence protocol control plane function network element to a second radio resource control network element, and the second radio resource control network element creates a radio resource control context of a terminal device, and sends a context setup request of the terminal device to the packet data convergence protocol control plane function network element. For example, if resource configuration levels of the second radio resource control network element and the packet data convergence protocol control plane function network element are high, the second radio resource control network element and the packet data convergence protocol control plane function network element provide a service for the terminal device. For example, the first radio resource control network element may be a fifth radio resource control network element in a specific implementation, the second radio resource control network element may be a third radio resource control network element in a specific implementation, and the packet data convergence protocol control plane function network element may be a second packet data convergence protocol control plane function network element in a specific implementation.

According to the foregoing method, an access network element with a relatively high resource configuration level may subsequently provide a service for the terminal device, thereby meeting a user requirement and improving user experience.

According to a fifth aspect, this application provides a network element selection method, and the method includes:
A radio resource control network element receives cause information from a first network element, where the cause information is used to indicate a terminal device to resend a radio resource control connection request that carries a high subscriber priority. Then, the radio resource control network element sends the cause information to a packet data convergence protocol control plane function network element, so that the packet data convergence protocol control plane function network element sends the cause information to the terminal device. For example, the radio resource control network element may be a fifth radio resource control network element in a specific implementation, and the packet data convergence protocol control plane function network element may be a fourth packet data convergence protocol control plane function network element in a specific implementation.

According to the foregoing method, the terminal device may re-initiate a radio resource control connection procedure, and select, in the radio resource control connection procedure, an access network element matching the high subscriber priority to provide a service for the terminal device, thereby meeting a user requirement and improving user experience.

According to a sixth aspect, this application provides a network element selection method, and the method includes:
A radio resource control network element sends packet data unit session resource setup request information to a packet data convergence protocol control plane function network element after receiving an identifier of a service data adaptation protocol/packet data convergence protocol user plane function network element from a first network element, where the packet data unit session resource setup request information includes the identifier of the service data adaptation protocol/packet data convergence protocol user plane function network element, so that the packet data convergence protocol control plane function network element sends a bearer context setup message to the service data adaptation protocol/packet data convergence protocol user plane function network element. For example, if a resource configuration level of the service data adaptation protocol/packet data convergence protocol user plane function network element is high, the service data adaptation protocol/packet data convergence protocol user plane function network element provides a service for a terminal device. For example, the radio resource control network element may be a sixth radio resource control network element in a specific implementation, the service data adaptation protocol/packet data convergence protocol user plane function network element may be a determined service data adaptation protocol/packet data convergence protocol user plane function network element in a specific implementation, and the packet data convergence protocol control plane function network element may be a fifth packet data convergence protocol control plane function network element in a specific implementation.

According to the foregoing method, an access network element with a high resource configuration level may provide a service for the terminal device, thereby meeting a user requirement and improving user experience.

According to a seventh aspect, this application further provides a communications apparatus. The communications apparatus has a function of implementing the first network element in the foregoing method example. The function may be implemented by hardware, or may be implemented by hardware executing corresponding software. The hardware or the software includes one or more modules corresponding to the foregoing function.

In a possible design, a structure of the communications apparatus includes an obtaining module and a processing module, and optionally, may further include a sending module. These modules may perform corresponding functions in the foregoing method example. For details, refer to detailed descriptions in the method example. Details are not described herein again.

In a possible design, a structure of the communications apparatus includes a transceiver and a processor, and optionally, may further include a memory. The transceiver is configured to: receive and send data, and communicate and interact with another device in a communications system. The processor is configured to support the first network element in performing a corresponding function in the foregoing method. The memory is coupled to the processor, and stores a program instruction and data that are necessary for the communications apparatus.

According to an eighth aspect, this application further provides a communications apparatus. The communications apparatus has a function of implementing the access network element in the foregoing method example. The function may be implemented by hardware, or may be implemented by hardware executing corresponding software. The hardware or the software includes one or more modules corresponding to the foregoing function.

In a possible design, a structure of the communications apparatus includes a processing module and a sending module, and optionally, may further include a receiving module. These modules may perform corresponding functions in the foregoing method example. For details, refer to detailed descriptions in the method example. Details are not described herein again.

In a possible design, a structure of the communications apparatus includes a transceiver and a processor, and optionally, may further include a memory. The transceiver is configured to: receive and send data, and communicate and interact with another device in a communications system. The processor is configured to support the access network element in performing a corresponding function in the foregoing method. The memory is coupled to the processor, and stores a program instruction and data that are necessary for the communications apparatus.

According to a ninth aspect, this application further provides a communications apparatus. The communications apparatus has a function of implementing the first radio resource control network element in the foregoing method example. The function may be implemented by hardware, or may be implemented by hardware executing corresponding software. The hardware or the software includes one or more modules corresponding to the foregoing function.

In a possible design, a structure of the communications apparatus includes an obtaining module and a sending module. These modules may perform corresponding functions in the foregoing method example. For details, refer to detailed descriptions in the method example. Details are not described herein again.

In a possible design, a structure of the communications apparatus includes a transceiver and a processor, and optionally, may further include a memory. The transceiver is configured to: receive and send data, and communicate and interact with another device in a communications system. The processor is configured to support the first radio resource control network element in performing a corresponding function in the foregoing method. The memory is coupled to the processor, and stores a program instruction and data that are necessary for the communications apparatus.

According to a tenth aspect, this application further provides a communications apparatus. The communications apparatus has a function of implementing the fourth radio resource control network element, the fifth radio resource control network element, or the sixth radio resource control network element in the foregoing method example. The function may be implemented by hardware, or may be implemented by hardware executing corresponding software. The hardware or the software includes one or more modules corresponding to the foregoing function.

In a possible design, a structure of the communications apparatus includes a receiving module and a sending module. These modules may perform corresponding functions in the foregoing method example. For details, refer to detailed descriptions in the method example. Details are not described herein again.

In a possible design, a structure of the communications apparatus includes a transceiver and a processor, and optionally, may further include a memory. The transceiver is configured to: receive and send data, and communicate and interact with another device in a communications system. The processor is configured to support the fourth radio resource control network element, the fifth radio resource control network element, or the sixth radio resource control network element in performing a corresponding function in the foregoing method. The memory is coupled to the processor, and stores a program instruction and data that are necessary for the communications apparatus.

According to an eleventh aspect, this application further provides a communications system. The communications system may include the first network element, the access network element (for example, a radio resource control network element, a packet data convergence protocol user plane function network element, or a service data adaptation protocol/packet data convergence protocol user plane function network element), and the like mentioned in the foregoing design.

According to a twelfth aspect, this application further provides a computer storage medium. The computer storage medium stores a computer executable instruction, and the computer executable instruction is used to enable a computer to perform any one of the foregoing methods when being invoked by the computer.

According to a thirteenth aspect, this application further provides a computer program product including an instruction. When the computer program product runs on a computer, the computer is enabled to perform any one of the foregoing methods.

According to a fourteenth aspect, this application further provides a chip system. The chip system includes a processor, configured to support the communications apparatus in implementing the function in the foregoing aspect, for example, generating or processing information in the foregoing method. In a possible design, the chip system further includes a memory, and the memory is configured to store a program instruction and data that are necessary for the communications apparatus. The chip system may include a chip, or may include a chip and another discrete device.

### BRIEF DESCRIPTION OF DRAWINGS

FIG. 1 is a schematic architectural diagram of a communications system according to this application;
FIG. 2 is a flowchart of a network element selection method according to this application;
FIG. 3 is a flowchart of registration of an access network element according to this application;
FIG. 4A, FIG. 4B, and FIG. 4C are a flowchart of an example of a network element selection method according to this application;
FIG. 5A, FIG. 5B, and FIG. 5C are a flowchart of an example of another network element selection method according to this application;
FIG. 6A, FIG. 6B, and FIG. 6C are a flowchart of an example of another network element selection method according to this application;
FIG. 7A, FIG. 7B, and FIG. 7C are a flowchart of an example of another network element selection method according to this application;
FIG. 8A, FIG. 8B, and FIG. 8C are a flowchart of an example of another network element selection method according to this application;
FIG. 9 is a flowchart of an example of another network element selection method according to this application;
FIG. 10 is a schematic structural diagram of a communications apparatus according to this application;
FIG. 11 is a schematic structural diagram of another communications apparatus according to this application;
FIG. 12 is a schematic structural diagram of another communications apparatus according to this application;
FIG. 13 is a schematic structural diagram of another communications apparatus according to this application; and
FIG. 14 is a structural diagram of a communications apparatus according to this application.

### DESCRIPTION OF EMBODIMENTS

The following further describes in detail this application with reference to accompanying drawings.

Embodiments of this application provide a network element selection method and an apparatus, to flexibly select a network element to provide a network function service for a terminal device, thereby meeting a user requirement. For example, the method and the apparatus in this application are based on a same inventive concept. Because problem resolving principles of the method and the apparatus are similar, mutual reference may be made to implementations of the apparatus and the method, and repeated parts are not described.

In the following, some terms in this application are described, to help a person skilled in the art have a better understanding.
(1) A terminal device may also be referred to as user equipment (user equipment, UE), a mobile station (mobile station, MS), a mobile terminal (mobile terminal, MT), or the like, and is a device that provides voice and/or data connectivity for a user. For example, the terminal device may include a handheld device that has a wireless connection function, a vehicle-mounted device, and the like. Currently, the terminal device may be a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like.
(2) An access network element is a network element that provides a network function service for the terminal device. The access network element may be, but is not limited to, a radio resource control network element, a packet data convergence protocol control plane function network element, a service data adaptation protocol/packet data convergence protocol user plane function network element, or the like. For example, the radio resource control network element may be a radio resource control (radio resource control, RRC) network element, the packet data convergence protocol control plane function network element may be a packet data convergence protocol control plane (packet data convergence protocol control plane, PDCP-C) network element, and the service data adaptation protocol/packet data convergence protocol user plane function network element may be a service data adaptation protocol (service data adaptation protocol, SDAP)/packet data convergence protocol user plane (packet data convergence protocol user plane, PDCP-U) network element. For example, access network elements that provide a same network function service may have different resource configuration levels, and access network elements of different resource configuration levels provide different service performance for the terminal device.
(3) In the descriptions of this application, words such as "first", "second", and "third" are merely used for distinction and description, and shall not be understood as an indication or an implication of relative importance or an indication or an implication of an order. In other words, in this application, the first, second, third, ..., and N^{th} (N is 1, 2, 3, 4, ..., or the like) are merely used for distinction and description, and there is no limitation on a sequence. To be specific, the fifth may appear before the first, or only the eighth may appear without the seventh. This is not limited in this application.

In this application, "at least one item" means one or more items, and "a plurality of items" means two or more items. The term "and/or" describes an association relationship for describing associated objects and represents that three relationships may exist. For example, A and/or B may represent the following three cases: Only A exists, both A and B exist, and only B exists, where A and B may be singular or plural. The character "/" generally indicates an "or" relationship between the associated objects. "At least one of the following items" or a similar expression means any combination of these items, including a single item or any combination of a plurality of items. For example, at least one of a, b, or c may represent a, b, c, a-b, a-c, b-c, or a-b-c, where a, b, and c may be a single one or a plurality of.

To describe the technical solutions in the embodiments of this application more clearly, the following describes in detail the network element selection method and the apparatus provided in the embodiments of this application with reference to accompanying drawings.

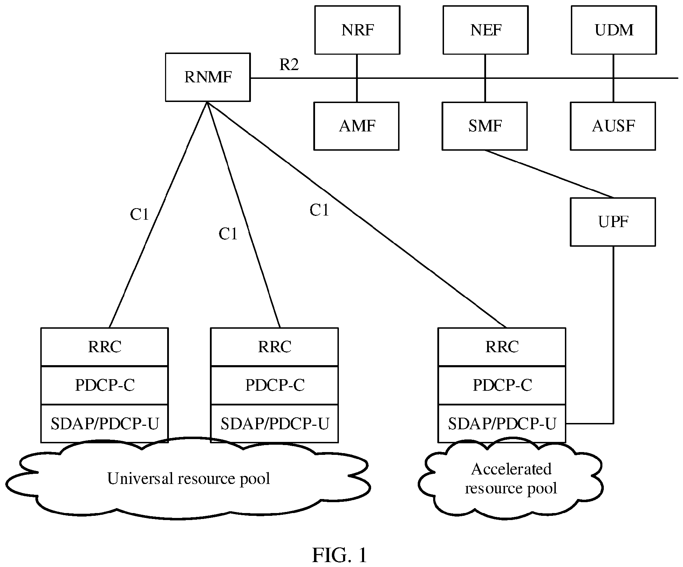

The network element selection method provided in the embodiments of this application is applicable to a possible architecture of a communications system. The architecture of the communications system includes a radio network management function network element, a network repository function network element, a network exposure function network element, a unified data management network element, an access and mobility management function network element, a session management function network element, an authentication service function, a user plane function network element, and a plurality of function network elements. The plurality of function network elements are a plurality of access network elements, and may include, but are not limited to, a plurality of radio resource control network elements, a plurality of packet data convergence protocol control plane function network elements, and a plurality of service data adaptation protocol/packet data convergence protocol user plane function network elements. For example, FIG. 1 shows a possible example of a structure of the communications system, including a radio network management function (radio network management function, RNMF) network element, a network service repository function (network repository function, NRF) network element, a network exposure function (network exposure function, NEF) network element, a unified data management (unified data manager, UDM) network element, an access and mobility management function (access and mobility management function, AMF) network element, a session management function (session management function, SMF) network element, an authentication server function (authentication server function, AUSF) network element, a user plane function (user plane function, UPF) network element, a plurality of RRC network elements, a plurality of PDCP-C network elements, and a plurality of SDAP/PDCP-U network elements. For example, the RNMF network element may be connected to the RRC network element through a C1 interface, and the RNMF network element may be connected to the NRF network element, the NEF network element, the UDM network element, the AMF network element, the SMF network element, and the AUSF network element through an R2 interface. An interface name is merely an example for description. This is not limited in the embodiments of this application. It should be understood that the embodiments of this application are not limited to the communications system shown in FIG. 1. Names of the network elements shown in FIG. 1 are merely used as an example for description herein, and are not used as limitations on the network elements included in the communications system architecture to which the method in this application is applicable. Functions of the network elements in the communications system are described in detail below.

The radio network management function network element is configured to provide a radio network management function, including a management function (for example, registration and discovery of an RRC function module, status information management, or performance level management (priority and resource performance level mapping)) of a service-oriented network function (network function, NF) in a radio access network (radio access network, RAN), RAN function control (including functions such as handover decision and paging), terminal device context maintenance and management, an interface communication function (service-oriented communication and interaction with a RAN control plane NF or a core network control plane NF based on service-oriented interfaces (C1 and R2)), and the like. For example, in 5G, the radio network management function network element may be an RNMF network element, for example, as shown in FIG. 1. In future communication, for example, in 6G, the radio network management function network element may still be an RNMF network element or have another name. This is not limited in this application.

The network service repository function network element may be configured to provide functions such as an NF registration/discovery function, NF status maintenance and management (including information such as a cell supported by an NF, a public land mobile network (public land mobile network, PLMN), and a radio access type (radio access type, RAT)), and a service type supported by the NF. For example, in 5G, the network service repository function network element may be an NRF network element, for example, as shown in FIG. 1. In future communication, for example, in 6G, the network service repository function network element may still be an NRF network element or have another name. This is not limited in this application.

The network exposure function network element may be configured to enable 3GPP to securely provide a network service capability for a third-party application function (application function, AF) network element (for example, a service capability server (services capability server, SCS) or an application server (application server, AS)), and the like. For example, in 5G, the network exposure function network element may be an NEF network element, for example, as shown in FIG. 1. In future communication, for example, in 6G, the network exposure function network element may still be an NEF network element or have another name. This is not limited in this application.

The unified data management network element may be configured to manage subscription data of the terminal device, registration information related to the terminal device, and the like. For example, in 5G, the unified data management network element may be a UDM network element, for example, as shown in FIG. 1. In future communication, for example, in 6G, the unified data management network element may still be a UDM network element or have another name. This is not limited in this application.

The access and mobility management function network element may be configured to manage access control and mobility of the terminal device. In actual application, the access and mobility management function network element includes a mobility management function in a mobility management entity (mobility management entity, MME) in a network framework of long term evolution (long term evolution, LTE), and includes an access management function. The access and mobility management function network element may be responsible for registration of the terminal device, mobility management, a tracking area update procedure, reachability detection, selection of a session management function network element, mobility status transition management, and the like. For example, in 5G, the access and mobility management function network element may be an AMF network element, for example, as shown in FIG. 1. In future communication, for example, in 6G, the access and mobility management function network element may still be an AMF network element or have another name. This is not limited in this application.

The session management function network element may be configured to be responsible for session management (including session setup, modification, and release) of the terminal device, selection and reselection of a user plane function network element, internet protocol (internet protocol, IP) address assignment of the terminal device, quality of service (quality of service, QoS) control, and the like. For example, in 5G, the session management function network element may be an SMF network element, for example, as shown in FIG. 1. In future communication, for example, in 6G, the session management function network element may still be an SMF network element or have another name. This is not limited in this application.

The authentication service function network element may be configured to provide an authentication service. For example, in 5G, the authentication server function network element may be an AUSF network element, for example, as shown in FIG. 1. In future communication, for example, in 6G, the authentication server function network element may still be an AUSF network element or have another name. This is not limited in this application.

The user plane function network element may be configured to forward user plane data of the terminal device. Main functions of the user plane function network element include data packet routing and forwarding, serving as a mobility anchor and an uplink classifier to route a service flow to a data network and a branch point to support a multi-homed packet data unit (Packet Data Unit, PDU) session, and the like. For example, in 5G, the user plane function network element may be a UPF network element, for example, as shown in FIG. 1. In future communication, for example, in 6G, the user plane function network element may still be a UPF network element or have another name. This is not limited in this application.

The radio resource control network element has a radio resource control function, and functions of the radio resource control network element include system message broadcast, RRC connection management (for example, RRC connection setup, reconfiguration, and release), mobility management (for example, measurement control and measurement reporting), and the like. For example, in 5G, the radio resource control network element may be an RRC network element, for example, as shown in FIG. 1. In future communication, for example, in 6G, the radio resource control network element may still be an RRC network element or have another name. This is not limited in this application.

The packet data convergence protocol control plane function network element may be configured to perform functions such as encryption and decryption of control plane signaling, and parsing of a PDU session resource (PDU session resource) parameter. For example, in 5G, the packet data convergence protocol control plane function network element may be a PDCP-C network element, for example, as shown in FIG. 1. In future communication, for example, in 6G, the packet data convergence protocol control plane function network element may still be a PDCP-C network element or have another name. This is not limited in this application.

The service data adaptation protocol/packet data convergence protocol user plane function network element may be configured to: perform matching processing on a user data packet, and perform encryption, decryption, and integrity protection on the user data packet. For example, in 5G, the service data adaptation protocol/packet data convergence protocol user plane function network element may be an SDAP/PDCP-U network element, for example, as shown in FIG. 1. In future communication, for example, in 6G, the service data adaptation protocol/packet data convergence protocol user plane function network element may still be an SDAP/PDCP-U network element or have another name. This is not limited in this application.

Each of the foregoing network elements may also be referred to as a function entity or a device, and may be a network element implemented on dedicated hardware, or may be a software instance running on dedicated hardware, or an instance of a virtualization function on a proper platform. For example, the virtualization platform may be a cloud platform. For example, the plurality of function network elements may be virtual (virtual) function network elements. In other words, the plurality of radio resource control network elements may be a plurality of virtual radio resource control network elements, the plurality of packet data convergence protocol control plane function network elements may be a plurality of virtual packet data convergence protocol control plane function network elements, the plurality of service data adaptation protocol/packet data convergence protocol user plane function network elements may be a plurality of virtual service data adaptation protocol/packet data convergence protocol user plane function network elements. For example, the RRC network element in FIG. 1 may be a vRRC network element, the PDCP-C network element may be a vPDCP-C network element, and the SDAP/PDCP-U network element may be a vSDAP/PDCP-U network element.

It should be noted that the architecture of the communications system shown in FIG. 1 is not limited to including only the network elements shown in the figure, and may further include another device not shown in the figure (for example, the communications system further includes a terminal device). Details are not described herein in this application.

It should be noted that a distribution form of the network elements is not limited in the embodiments of this application. The distribution form shown in FIG. 1 is merely an example, and is not limited in this application.

For ease of description, the network element shown in FIG. 1 is used as an example for description subsequently in this application, and an XX network element is directly referred to as XX. It should be understood that names of all network elements in this application are merely used as an example, and may also be referred to as other names in future communication, or the network element in this application may be replaced by another entity or device that has a same function in future communication. This is not limited in this application. A unified description is provided herein, and details are not described later.

It should be noted that the communications system shown in FIG. 1 does not constitute a limitation on a communications system to which the embodiments of this application are applicable. The architecture of the communications system shown in FIG. 1 is a 5G system architecture. Optionally, the method in the embodiments of this application is further applicable to various future communications systems, such as 6G or another communications network.

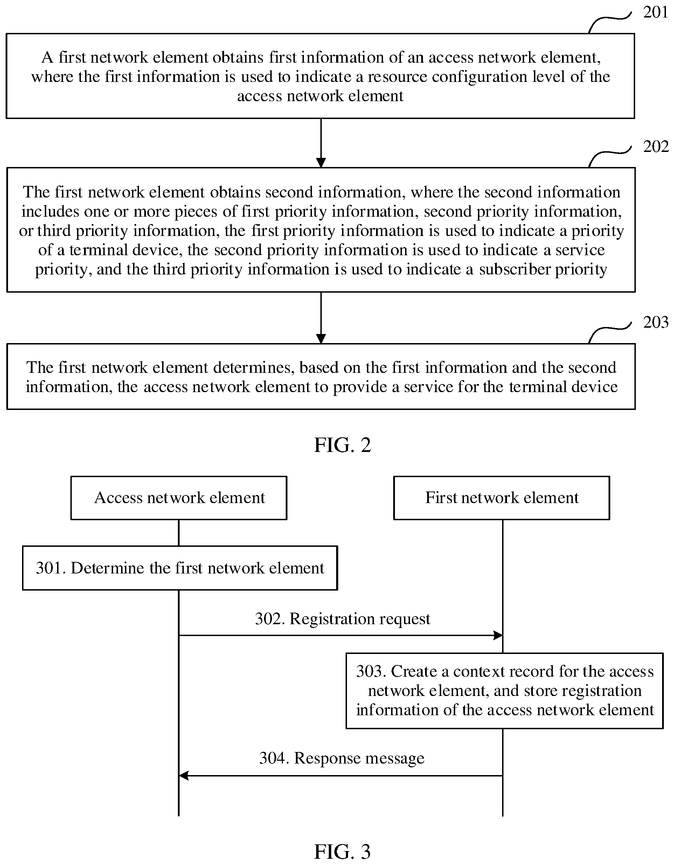

A network element selection method provided in an embodiment of this application is applicable to the communications system shown in FIG. 1. Referring to FIG. 2, a procedure of the method includes the following steps.

Step 201: A first network element obtains first information of an access network element, where the first information is used to indicate a resource configuration level of the access network element.

For example, the first network element may be a radio network management function network element, for example, an RNMF network element in the communications system shown in FIG. 1. The access network element may be one or more of a radio resource control network element, a packet data convergence protocol control plane function network element, or a service data adaptation protocol/packet data convergence protocol user plane function network element, for example, one or more of an RRC network element, a PDCP-C network element, or an SDAP/PDCP-U network element.

In a possible implementation, a plurality of access network elements may provide a same service for a terminal device, that is, provide a same network function service. The plurality of access network elements that provide the same service may have different resource configuration levels. The resource configuration level may also be referred to as a performance level. For example, the resource configuration level of the access network element may be a common level or a high level, or may be a high level, a medium level, or a low level. A division form of the resource configuration level may be determined based on actual experience. This is not limited in this application.

For example, in step 201, the first network element may obtain the first information of the access network element through a registration procedure of the access network element. For example, a process in which the access network element registers with the first network element after being started is further described with reference to FIG. 3.

Step 202: The first network element obtains second information, where the second information includes one or more of first priority information, second priority information, or third priority information, the first priority information is used to indicate a priority of a terminal device, the second priority information is used to indicate a service priority, and the third priority information is used to indicate a subscriber priority.

Step 203: The first network element determines, based on the first information and the second information, the access network element to provide a service for the terminal device.

Therefore, according to the network element selection method provided in this embodiment of this application, the first network element may select the access network element whose resource configuration level matches the second information (priority information) to provide a service for the terminal device. In this way, selection of the access network element is relatively flexible, so that a user requirement can be better met and user experience can be improved.

In actual application, a network element that meets a requirement may be selected in different communication procedures of the terminal device based on an actual requirement. For example, the communication procedures may include a radio resource control connection setup procedure, a registration procedure of the terminal device, a packet data unit session setup procedure, a network handover procedure of the terminal device, and a procedure in which the terminal device is in an idle mode and is paged. For example, in different communication procedures, the second information obtained by the first network element may be the same or different, selected access network elements may be different or the same, and an interaction operation between the first network element and a selected access network element and an interaction operation between the first network element and another network element may be different.

For example, in the radio resource control connection setup procedure, the second information may be the first priority information. For example:

A method for obtaining the second information by the first network element in step 202 may be: The first network element receives the first priority information from a first radio resource control network element. For example, the first radio resource control network element may be a default radio resource control network element in the system. Generally, a resource configuration level of the first radio resource control network element is a common level.

That the first network element determines, based on the first information and the second information, the access network element to provide a service for a terminal device in step 203 may be: If the first priority information is a high priority, and the first information indicates that resource configuration levels of a first packet data convergence protocol control plane function network element and a second radio resource control network element are high, the first network element determines the first packet data convergence protocol control plane function network element and the second radio resource control network element to each provide a service for the terminal device. In other words, when the first priority information is a high priority (in other words, when a priority of the terminal device is high), the first network element may select the first packet data convergence protocol control plane function network element corresponding to the high priority from a plurality of packet data convergence protocol control plane function network elements, and select the second radio resource control network element corresponding to the high priority from a plurality of radio resource control network elements. In this way, an access network element that provides a service for the terminal device can meet an actual requirement of the terminal device.

After the first network element determines the first packet data convergence protocol control plane function network element and the second radio resource control network element to each provide a service for the terminal device, the first network element may forward, by using the following two solutions, related information about a radio resource control connection of the terminal device to a newly selected network element for service processing:

Solution al: The first network element sends an identifier of the first packet data convergence protocol control plane function network element, an identifier of the second radio resource control network element, and redirection indication information to the first radio resource control network element, where the redirection indication information is used to indicate the first radio resource control network element to send the identifier of the first packet data convergence protocol control plane function network element and a radio resource control connection setup request of the terminal device to the second radio resource control network element. For example, the first network element may send the identifier of the first packet data convergence protocol control plane function network element, the identifier of the second radio resource control network element, and the redirection indication information to the first radio resource control network element by using a priority report acknowledgment (Priority report ack) message.

Then, after the first radio resource control network element sends the identifier of the first packet data convergence protocol control plane function network element and the radio resource control connection setup request of the terminal device to the second radio resource control network element, the second radio resource control network element sends radio resource control connection setup information to the first packet data convergence protocol control plane function network element. In this way, a radio resource control connection procedure of the terminal device may be subsequently responded to and completed by using the first packet data convergence protocol control plane function network element and the second radio resource control network element.

Solution a2: The first network element receives a radio resource control connection request of the terminal device from the first radio resource control network element, and the first network element sends an identifier of the first packet data convergence protocol control plane function network element and the radio resource control connection request of the terminal device to the second radio resource control network element.

Then, the second radio resource control network element sends radio resource control connection setup information to the first packet data convergence protocol control plane function network element. In this way, a radio resource control connection procedure of the terminal device may be subsequently responded to and completed by using the first packet data convergence protocol control plane function network element and the second radio resource control network element.

Certainly, the case in which the first priority information is a high priority is described above. When the first priority information is a low priority, an access network element may not need to be reselected. In other words, the radio resource control connection procedure may be completed by using the first radio resource control network element and a default packet data convergence protocol control plane function network element. The process is the same as an existing procedure, and details are not described herein in this application. Alternatively, when the resource configuration level of the first radio resource control network element is not a common level but a high level, and the first priority is a low priority, the first network element may reselect a radio resource control network element and a packet data convergence protocol control plane function network element whose resource configuration levels are common levels to perform a subsequent procedure.

For another example, in the registration procedure of the terminal device, the second information may be the third priority information. For example:

The first network element may obtain the second information in step 202 by using the following two methods:
Method b1: The first network element obtains the third priority information from a unified data management function network element.
Method b2: The first network element obtains the third priority information from an access and mobility management function network element. For example, before the access and mobility management function network element sends the third priority information to the first network element, the access and mobility management function network element obtains the third priority information from a unified data management function network element.

That the first network element determines, based on the first information and the second information, the access network element to provide a service for a terminal device in step 203 may be: If the third priority information is a high subscriber priority, and the first information indicates that resource configuration levels of a second packet data convergence protocol control plane function network element and a third radio resource control network element are high, the first network element determines the second packet data convergence protocol control plane function network element and the third radio resource control network element to each provide a service for the terminal device. In other words, when the third priority is a high subscriber priority, the first network element may select the second packet data convergence protocol control plane function network element corresponding to the high subscriber priority from a plurality of packet data convergence protocol control plane function network elements, and select the third radio resource control network element corresponding to the high subscriber priority from a plurality of radio resource control network elements. In this way, an access network element that provides a service for the terminal device can meet an actual requirement of the terminal device. For example, the high subscriber priority may indicate that a user is a gold user or a silver user.

In a possible implementation, after the first network element determines the second packet data convergence protocol control plane function network element and the third radio resource control network element to each provide a service for the terminal device, the first network element may transfer contexts of the terminal device on a default radio resource control network element and a default packet data convergence protocol control plane function network element to the second packet data convergence protocol control plane function network element and the third radio resource control network element by using the following two solutions:

Solution c1: The first network element sends handover indication information to a fourth radio resource control network element, where the handover indication information is used to indicate the fourth radio resource control network element to initiate a handover request. The first network element receives first handover request information from the fourth radio resource control network element. The first network element sends an identifier of the second packet data convergence protocol control plane function network element to the third radio resource control network element, so that the third radio resource control network element creates a radio resource control context of the terminal device, and sends a context setup request of the terminal device to the second packet data convergence protocol control plane function network element. For example, the fourth radio resource control network element is a default radio resource control network element in the system, and the fourth radio resource control network element may be the same as the first radio resource control.

The first network element receives handover acknowledgment information from the third radio resource control network element after the first network element sends the identifier of the second packet data convergence protocol control plane function network element to the third radio resource control network element, where the handover acknowledgment information is sent after the third radio resource control network element receives a context setup response from the second packet data convergence protocol control plane function network element. For example, the context setup response is sent after the second packet data convergence protocol control plane function network element modifies a context of the terminal device on an access network distributed unit. The first network element sends radio resource control reconfiguration request information to the terminal device by using the fourth radio resource control network element and a third packet data convergence protocol control plane function network element, so that a context of the terminal device on the third radio resource control network element is updated to the terminal device. For example, the third packet data convergence protocol control plane function network element is a default packet data convergence protocol control plane function network element in the system.

Solution c2: The first network element sends cause information to the terminal device by using a fifth radio resource control network element and a fourth packet data convergence protocol control plane function network element, where the cause information is used to indicate the terminal device to resend a radio resource control connection request that carries a high subscriber priority. For example, the fifth radio resource control network element may be the same as the fourth radio resource control network element, and the fourth packet data convergence protocol control plane function network element may be the same as the third packet data convergence protocol control plane function network element.

Certainly, the case in which the third priority information is a high subscriber priority is described above. When the third priority information is a low subscriber priority, an access network element may not need to be reselected. In other words, the registration procedure of the terminal device may be completed by using a default radio resource control network element (for example, the fourth radio resource control network element or the fifth radio resource control network element) and a default packet data convergence protocol control plane function network element (for example, the third packet data convergence protocol control plane function network element or the fourth packet data convergence protocol control plane function network element). A process is the same as an existing procedure, and details are not described herein in this application. Alternatively, when a default radio resource control network element (for example, the fourth radio resource control network element or the fifth radio resource control network element) and a default packet data convergence protocol control plane function network element (for example, the third packet data convergence protocol control plane function network element or the fourth packet data convergence protocol control plane function network element) are of a high level, and the third priority information is a low subscriber priority, the first network element may select a radio resource control network element and a packet data convergence protocol control plane function network element whose resource configuration levels are common levels to perform a subsequent procedure.

For another example, in the packet data unit session setup procedure, the second information may be any one of the first priority information, the second priority information, or the third priority information. For example, based on different second information, the first network element may obtain the second information in step 202 by using the following two methods:
Method d1: The first network element receives the second priority information from an access and mobility management function network element.
Method d2: The first network element obtains the first priority information or the third priority information from the first network element. In other words, the first network element obtains the first priority information or the third priority information locally stored by the first network element.

When the first network element obtains the second priority information by using the method d1, that the first network element determines, based on the first information and the second information, the access network element to provide a service for a terminal device may be: If the second priority information is a high service priority, and the first information indicates that a resource configuration level of a first service data adaptation protocol/packet data convergence protocol user plane function network element is high, the first network element determines the first service data adaptation protocol/packet data convergence protocol user plane function network element to provide a service for the terminal device. In other words, when the second priority information is a high service priority, the first network element may select the first service data adaptation protocol/packet data convergence protocol user plane function network element corresponding to the high service priority from a plurality of service data adaptation protocol/packet data convergence protocol user plane function network elements. In this way, an access network element that provides a service for the terminal device can meet an actual requirement of the terminal device.

When the first network element obtains the second information by using the method d2, that the first network element determines, based on the first information and the second information, the access network element to provide a service for a terminal device may include the following two cases:
Case e1: If the first priority information is a high priority, and the first information indicates that a resource configuration level of a second service data adaptation protocol/packet data convergence protocol user plane function network element is high, the first network element determines the second service data adaptation protocol/packet data convergence protocol user plane function network element to provide a service for the terminal device. In other words, when the first network element obtains the first priority information and the first priority information is a high priority, the first network element may select the second service data adaptation protocol/packet data convergence protocol user plane function network element corresponding to the high priority from a plurality of service data adaptation protocol/packet data convergence protocol user plane function network elements.
Case e2: If the third priority information is a high subscriber priority, and the first information indicates that a resource configuration level of a third service data adaptation protocol/packet data convergence protocol user plane function network element is high, the first network element determines the third service data adaptation protocol/packet data convergence protocol user plane function network element to provide a service for the terminal device. In other words, when the first network element obtains the third priority information and the third priority information is a high subscriber priority, the first network element may select the third service data adaptation protocol/packet data convergence protocol user plane function network element corresponding to the high subscriber priority from a plurality of service data adaptation protocol/packet data convergence protocol user plane function network elements.

According to the foregoing method, an access network element that provides a service for the terminal device can meet an actual requirement of the terminal device.

According to the foregoing method, after the first network element determines, based on the first information and the second information, the access network element to provide a service for the terminal device, the first network element sends an identifier of a determined service data adaptation protocol/packet data convergence protocol user plane function network element to a sixth radio resource control network element, the sixth radio resource control network element sends packet data unit session resource setup request information to a fifth packet data convergence protocol control plane function network element, and then the fifth packet data convergence protocol control plane function network element sends bearer context setup information to a fourth service data adaptation protocol/packet data convergence protocol user plane function network element. The packet data unit session resource setup request information includes the identifier of the determined service data adaptation protocol/packet data convergence protocol user plane function network element, and the fourth service data adaptation protocol/packet data convergence protocol user plane function network element is one of determined service data adaptation protocol/packet data convergence protocol user plane function network elements.

It should be noted that in any one of the foregoing cases, there may be one or more service data adaptation protocol/packet data convergence protocol user plane function network elements determined by the first network element. In other words, there are one or more first service data adaptation protocol/packet data convergence protocol user plane function network elements, there are one or more second service data adaptation protocol/packet data convergence protocol user plane function network elements, or there are one or more third service data adaptation protocol/packet data convergence protocol user plane function network elements. When there is one determined service data adaptation protocol/packet data convergence protocol user plane function network element, if the second information is different, the fourth service data adaptation protocol/packet data convergence protocol user plane function network element may be one of the first service data adaptation protocol/packet data convergence protocol user plane function network element, the second service data adaptation protocol/packet data convergence protocol user plane function network element, or the third service data adaptation protocol/packet data convergence protocol user plane function network element; when there are a plurality of determined service data adaptation protocol/packet data convergence protocol user plane function network elements, if the second information is different, the fourth service data adaptation protocol/packet data convergence protocol user plane function network element may be one first service data adaptation protocol/packet data convergence protocol user plane function network element selected from a plurality of first service data adaptation protocol/packet data convergence protocol user plane function network elements, or may be one second service data adaptation protocol/packet data convergence protocol user plane function network element selected from a plurality of second service data adaptation protocol/packet data convergence protocol user plane function network elements, or may be one third service data adaptation protocol/packet data convergence protocol user plane function network element selected from a plurality of third service data adaptation protocol/packet data convergence protocol user plane function network elements.

The case in which the second information indicates that priority information is high is described above. When the priority information indicated by the second information is low, the first network element may select a service data adaptation protocol/packet data convergence protocol user plane function network element whose resource configuration level is common, as long as an actual requirement of the terminal device is met.

For another example, in the network handover procedure of the terminal device, the second information may be one of the first priority information, the second priority information, or the third priority information. For example:

A method for obtaining the second information by the first network element in step 202 may be: The first network element determines an identifier of a target cell to which the terminal device is to be handed over, and obtains target priority information from the first network element based on the identifier of the target cell, where the target priority information is the first priority information, the second priority information, or the third priority information. For example, in the radio resource control connection setup procedure of the terminal device or the registration procedure of the terminal device, the first network element sets up a related context for the terminal device, and stores the second information in the context. Therefore, the first network element may select, based on the identifier of the target cell, the first network element to store the target priority information of the corresponding target cell.

That the first network element determines, based on the first information and the second information, the access network element to provide a service for a terminal device in step 203 may be: The first network element determines, based on the first information and the second information (namely, the target priority information), a sixth packet data convergence protocol control plane function network element, a fifth service data adaptation protocol/packet data convergence protocol user plane function network element, and a seventh radio resource control network element to each provide a service for the terminal device. For example, resource configuration levels of the sixth packet data convergence protocol control plane function network element, the fifth service data adaptation protocol/packet data convergence protocol user plane function network element, and the seventh radio resource control network element match the target priority information. That is, when the target priority information is high, the resource configuration levels of the sixth packet data convergence protocol control plane function network element, the fifth service data adaptation protocol/packet data convergence protocol user plane function network element, and the seventh radio resource control network element are high, and when the target priority information is low (common), the resource configuration levels of the sixth packet data convergence protocol control plane function network element, the fifth service data adaptation protocol/packet data convergence protocol user plane function network element, and the seventh radio resource control network element are low (common).

In an optional implementation, after the first network element determines, based on the first information and the second information, the access network element to provide a service for the terminal device, the first network element sends an identifier of the sixth packet data convergence protocol control plane function function instance and an identifier of the fifth service data adaptation protocol/packet data convergence protocol user plane function network element to the seventh radio resource control network element, so that the seventh radio resource control network element sends a packet data unit session resource setup request to the sixth packet data convergence protocol control plane function function instance, and the sixth packet data convergence protocol control plane function sends a bearer context setup message to the fifth service data adaptation protocol/packet data convergence protocol user plane function network element.

For another example, in the procedure in which the terminal device is in an idle mode and is paged, the second information may be the first priority information. For example:
A method for obtaining the second information by the first network element in step 202 may be: The first network element obtains the first priority information from an access and mobility management function network element.

That the first network element determines, based on the first information and the second information, the access network element to provide a service for a terminal device in step 203 may be: The first network element determines, based on the first information and the second information (the first priority information herein), a seventh packet data convergence protocol control plane function network element and an eighth radio resource control network element to each provide a service for the terminal device. For example, resource configuration levels of the seventh packet data convergence protocol control plane function network element and the eighth radio resource control network element match the first priority information. That is, when the first priority information is a high priority, the resource configuration levels of the seventh packet data convergence protocol control plane function network element and the eighth radio resource control network element are high, and when the first priority information is a low priority (common), the resource configuration levels of the seventh packet data convergence protocol control plane function network element and the eighth radio resource control network element are low (common).In an optional implementation, after the first network element determines, based on the first information and the second information, the access network element to provide a service for the terminal device, the first network element sends an identifier of the seventh packet data convergence protocol control plane function network element to the eighth radio resource control network element, so that the eighth radio resource control network element sends paging information to the terminal device by using the seventh packet data convergence protocol control plane function network element.

According to the network element selection method provided in this embodiment of this application, the first network element obtains the first information of the access network element and obtains the second information, where the first information is used to indicate the resource configuration level of the access network element, the second information includes one or more of the first priority information, the second priority information, or the third priority information, the first priority information is used to indicate the priority of the terminal device, the second priority information is used to indicate the service priority, and the third priority information is used to indicate the subscriber priority; and the first network element determines, based on the first information and the second information, the access network element to provide a service for the terminal device. According to the foregoing method, the first network element may select the access network element whose resource configuration level matches the second information (priority information) to provide a service for the terminal device. In this way, selection of the access network element is relatively flexible, so that a user requirement can be better met and user experience can be improved.

For example, FIG. 3 shows a registration process of an access network element. The process may include the following steps.

Step 301: An access network element determines a first network element.

In an optional implementation, an address of the first network element is configured in the access network element, and the access network element may directly determine the first network element based on the configured address.

In another optional implementation, the access network element may dynamically query an address of the first network element. For example, the access network element queries a domain name server (domain name server, DNS) for the address of the first network element.

Step 302: The access network element sends a registration request to the first network element, that is, the access network element registers first information with the first network element.

For example, in an optional implementation, the registration request may carry information such as an identifier of the access network element (for example, a name of the access network element), a performance level (namely, a resource configuration level, or in other words, the first information) of the access network element, a supported service type, an availability status, a release, a supported serving public land mobile network (public land mobile network, PLMN), a cell, and a supported RAT. For example, the performance level of the access network element may be a resource level of a VM or a container deployed in the corresponding access network element, or a service function optimization level of the access network element (for example, for an ultra-reliable and low latency communications (ultra high-reliable and low-latency communication, URLLC) service, the access network element uses an optimized design such as a simplified service processing function), and a value of the performance level is high or common. The supported service type may include URLLC, enhanced mobile broadband (enhanced mobile broadband, eMBB), internet of things (Internet of things, IoT) (for example, for an IoT service with low mobility, an RRC function can simplify support for a mobility function), NB-IoT, and the like. The release is a standard protocol release that a network function provided by the access network element complies with, for example, 3GPP Release-14, 3GPP Release-15, or 3GPP Release-16. RAT information may be one or more RATs of global system for mobile communications (global system for mobile communication, GSM)/enhanced data rates for GSM evolution (enhanced data rate for GSM evolution, EDGE) radio access network ((GSM/EDGE radio access network, GERAN)-supported), universal mobile telecommunications system (universal mobile telecommunications system, UMTS) terrestrial radio access network ((universal terrestrial radio access network, UTRAN)-supported), evolved universal terrestrial radio access network ((evolved universal terrestrial radio access network, E-UTRAN)-supported), or 5G new radio (5G (new radio, NR)-supported). Descriptions of a plurality of RATs may be a set of the foregoing several types, or may be a hybrid new form, for example, GERAN/UTRAN-supported or E-UTRAN/5GNR-supported. The availability status may also be considered as a load status.

In an optional implementation, the registration request may not include the foregoing supported service type, the availability status (for example, available (available) or unavailable (not-available)), the release, or the like.

It should be noted that all the information carried in the registration request may be referred to as registration information. Certainly, the registration information is merely an example name. This is not limited in this application.

Step 303: The first network element creates a context record for the access network element, and stores registration information of the access network element.

In step 303, the first network element may subsequently obtain the first information from the stored registration information.

Step 304: The first network element sends a response message to the access network element, to confirm that registration of the access network element is completed.

Based on the foregoing registration procedure, the access network element may register the first information with the first network element, so that the first network element obtains the resource configuration level of the access network element, and subsequently the first network element may select an access network element with a proper resource configuration level to provide a service for a terminal device.

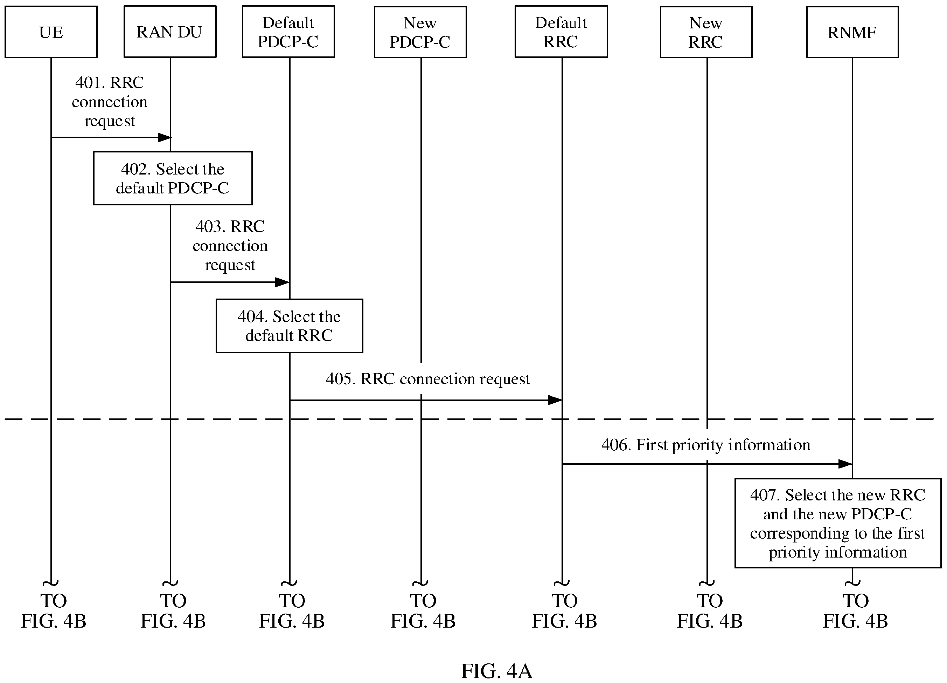

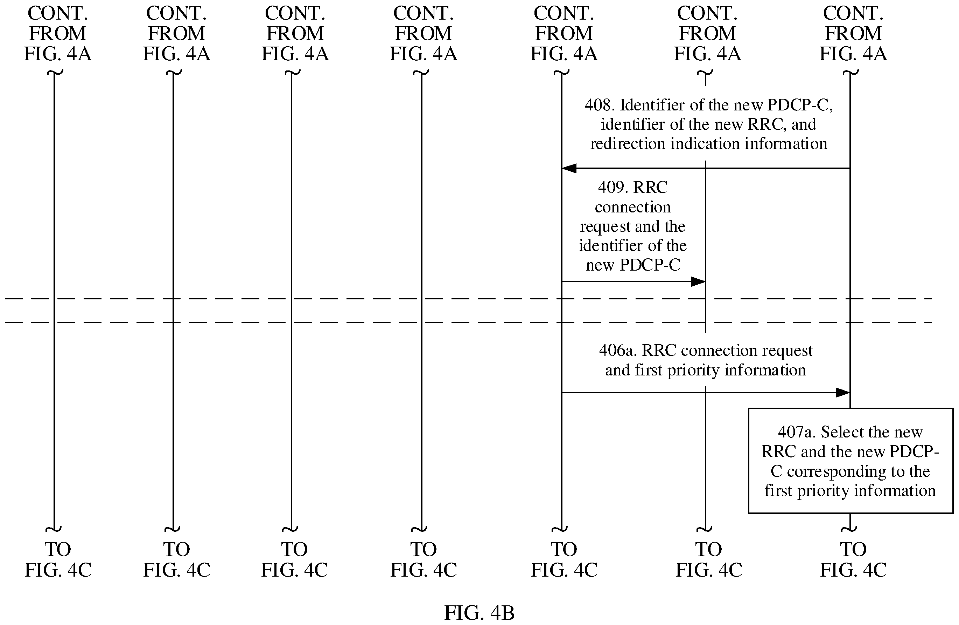

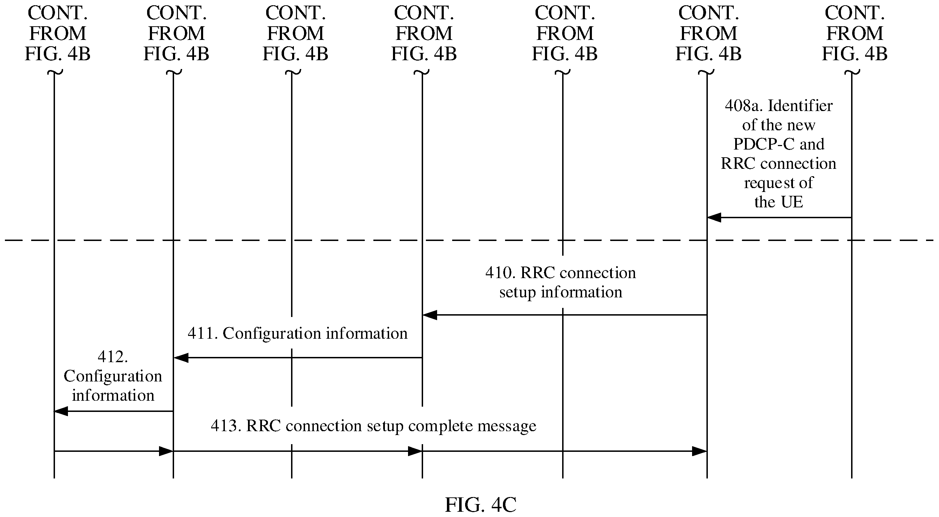

The following embodiments in FIG. 4A, FIG. 4B, and FIG. 4C to FIG. 9 are examples in which the network element selection method provided in the embodiments of this application is used in different communication procedures based on the foregoing embodiments. For example, in the following examples, a radio resource control network element is an RRC, a packet data convergence protocol control plane function network element is a PDCP-C, and a service data adaptation protocol/packet data convergence protocol user plane function network element is an SDAP/PDCP-U. Other related network elements or devices are all shown by using corresponding examples. For example, an access and mobility management function network element is shown as an AMF. Details are not described herein again.

FIG. 4 show that a network element selection method provided in an embodiment of this application is applied to a radio resource control connection setup procedure. The example procedure may include the following steps.

Step 401: UE sends an RRC connection request (RRC connection request) to a RAN DU.

For example, the RRC connection request is the radio resource control connection setup request in the embodiment shown in FIG. 2.

If the UE is high-priority UE, the UE adds high priority access (Highpriorityaccess) indication information to the RRC connection request. Highpriorityaccess is the first priority information in the embodiment shown in FIG. 2. In this case, the first priority information is a high priority. In addition, the RRC connection request may further carry an identifier of the UE.

In an optional implementation, the RAN DU may be a radio link control protocol (radio link control, RLC) network element, a media access control (media access control, MAC) network element, a physical layer (physical layer, PHY) network element, or the like.

Step 402: The RAN DU selects a default PDCP-C after receiving the RRC connection request of the UE.

Because the UE initially accesses a network, there is no related context information of the UE on a radio network side. Therefore, the RAN DU selects the default PDCP-C. For example, address information of the default PDCP-C is usually statically configured on the RAN DU, and is mainly used to select the default PDCP-C function instance and send the RRC connection request to the default PDCP-C function instance when there is no related context of the UE on the RAN DU and the RAN DU does not know a specific PDCP-C to which the RRC connection request is to be forwarded after receiving the RRC connection request of the UE, or in other words, perform step 403. A performance level of the default PDCP-C is usually a common level. The default PDCP-C may be set to a high-level PDCP-C based on a network configuration requirement.

Step 403: The RAN DU forwards the RRC connection request of the UE to the default PDCP-C.

Step 404: The default PDCP-C selects a default RRC after receiving the RRC connection request forwarded by the RAN DU. The default RRC is the first radio resource control network element in the embodiment shown in FIG. 2.

For example, address information of the default RRC is usually statically configured on the default PDCP-C, and is mainly used to select the default RRC and send the RRC connection request to the default RRC when there is no related context of the UE on the default PDCP-C and the default PDCP-C does not know a specific RRC to which the RRC connection request is to be sent after receiving the RRC connection request of the UE, or in other words, perform step 405.

Step 405: The default PDCP-C forwards the RRC connection request of the UE to the default RRC.

Step 406: The default RRC sends first priority information (Highpriorityaccess) to an RNMF after receiving the RRC connection request of the UE.

For example, the default RRC parses the RRC connection request to obtain an information element parameter in the RRC connection request. Because the RRC connection request carries Highpriorityaccess, the RRC is triggered to initiate UE priority reporting processing (in other words, perform step 406). In an optional implementation, the default RRC may send the first priority information to the RNMF by using a priority report (Priority report) message.

In an optional implementation, the priority report message further carries a UE ID, an RAT type (type) of the default RRC, and a serving cell identity (cell (identification, ID)) and a public land mobile network (public land mobile network, PLMN) ID of the default RRC. For example, the RAT type, the cell ID, and the PLMN ID of the default RRC are all reference information used by the RNMF to select a new RRC, so that the RNMF selects an RRC that has a same RAT and can serve a same cell and a same PLMN as the default RRC.

Step 407: The RNMF selects a new RRC and a new PDCP-C corresponding to the first priority information. The new RRC is the second radio resource control network element in the embodiment shown in FIG. 2, and the new PDCP-C is the first packet data convergence protocol control plane function network element in the embodiment shown in FIG. 2.

The RNMF creates a context for the UE after receiving the priority report message sent by the RRC. The context may include Highpriorityaccess, and may further include the RAT type, the cell ID, and the PLMN ID. The RNMF may query, based on information in the context, status information of the RRC and the PDCP-C stored in the RNMF, select a new RRC and a new PDCP-C matching a performance level (in other words, the new RRC and the new PDCP-C corresponding to the first priority information) for the UE, and determine identifiers of the RRC and the PDCP-C.

For example, the identifier of the RRC and the identifier of the PDCP-C may be an internet protocol address (Internet protocol address, IP address) of the RRC or an IP address of the PDCP-C, or may be other IDs that can uniquely identify the RRC and the PDCP-C. In the embodiments described in this specification, the IP address of the RRC or the PDCP-C is used as an example for description.

Step 408: The RNMF sends an identifier of the new PDCP-C, an identifier of the new RRC, and redirection indication information to the default RRC. The redirection indication information is used to indicate the default RRC to send the identifier of the new PDCP-C and the RRC connection request of the terminal device to the new RRC.

In an optional implementation, the RNMF may send the identifier of the new PDCP-C, the identifier of the new RRC, and the redirection indication information to the default RRC by using a priority report acknowledgment (Priority report ack) message. The priority report acknowledgment message may carry the redirection indication information (Redirection indication), the identifier of the new RRC (RRC IP address), and the identifier of the new PDCP-C (PDCP-C IP address).

Step 409: The default RRC sends the RRC connection request of the UE and the identifier of the new PDCP-C (PDCP-C IP address) to the new RRC according to the redirection indication information.

The default RRC may send, by using an RRC connection request forwarding (RRC connection transfer) message, the RRC connection request and the identifier of the new PDCP-C to the new RRC identified by the RRC IP address. For example, the default RRC may encapsulate all information element parameters in the RRC connection request into an RRC connection request PDU, and send the RRC connection request PDU to the new RRC by using the RRC connection request forwarding message.

Step 410: The new RRC sends RRC connection setup information to the new PDCP-C.

For example, the new RRC may parse the RRC connection request PDU to obtain the information element parameters in the RRC connection request PDU, create an RRC context for the UE, and then send the RRC connection setup information to the new PDCP-C identified by the PDCP-C IP address. For example, the new RRC may send the RRC connection setup information to the new PDCP-C by using an RRC connection setup (RRC connection setup) message. The RRC connection setup information may include information such as an RRC transaction identifier (RRC-TransactionIdentifier) and a radio resource dedicated configuration (RadioResourceConfigDedicated) .

Step 411: The new PDCP-C performs information configuration based on the RRC connection setup information, and sends configuration information to the RAN DU.

For example, the new PDCP-C parses RadioResourceConfigDedicated to obtain configuration information (for example, a nextHopChainingCount configuration) of the PDCP-C in RadioResourceConfigDedicated, performs related configuration, and sends the configuration information to the RAN DU by using the RRC connection setup (RRC connection setup). For example, the configuration information may include configuration parameters of an RLC layer, a MAC layer, and a PHY layer.

Step 412: The RAN DU forwards the configuration information to the UE.

For example, the RAN DU forwards the configuration information to the UE by forwarding the RRC connection setup (RRC connection setup).

Step 413: The UE completes related configuration of the UE, and sends an RRC connection setup complete (RRC connection complete) message to the new RRC by using the RAN DU and the new PDCP-C in sequence.

For example, the UE first sends the RRC connection complete message to the RAN DU, the RAN DU forwards the RRC connection complete message to the new PDCP-C, and then the new PDCP-C forwards the RRC connection complete message to the new RRC.

In another implementation, after step 405, the following step 406a to step 408a are performed, and then step 410 to step 413 are performed. For example:
Step 406a: The default RRC sends the RRC connection request and first priority information (Highpriorityaccess) to an RNMF after receiving the RRC connection request of the UE.

For example, the default RRC may send the RRC connection request and the first priority information to the RNMF by using a priority report (Priority report) message. For example, the default RRC may encapsulate all information element parameters in the RRC connection request into an RRC connection request PDU, and send the RRC connection request PDU to the RNMF by using the priority report.

Step 407a: The RNMF selects a new RRC and a new PDCP-C corresponding to the first priority information.

For example, step 407a is similar to step 407, and mutual reference may be made to each other. Details are not described herein again.

Step 408a: The RNMF sends an identifier of the new PDCP-C and the RRC connection request of the UE to the new RRC.

For example, the RNMF may send the identifier of the new PDCP-C and the radio resource control connection request of the terminal device to the new RRC by using an RRC connection setup (RRC connection setup) message.

According to the foregoing steps, after setup of an RRC connection is completed, the UE may initiate a non-access stratum (Non-access stratum, NAS) request to the network side by using the RRC and the PDCP-C selected in the RRC connection setup procedure. For example, the UE adds UE registration information (UE registration request PDU) to the RRC connection complete message, to register the UE with the network. A UE registration procedure is executed according to a UE registration procedure in the current technology. However, when sending a UE registration request to an AMF, the RNMF needs to send a priority of the terminal device (UE priority) (namely, Highpriorityaccess, or in other words, first priority information) to the AMF, and the AMF stores the information in the UE context. In this way, the AMF sends the information to the RNMF during subsequent AMF paging, and the RNMF selects the RRC and the PDCP-C based on the information to page the UE.

In an optional implementation, when the default RRC in the foregoing procedure is not of a common level but a high level, and the default RRC initiates UE priority reporting if the default RRC determines that the received message does not carry Highpriorityaccess, the reported first priority information is normal-priorityaccess (in other words, Highpriorityaccess in the foregoing procedure is replaced with normal-priorityaccess), and the new RRC and the new PDCP-C subsequently selected by the RNMF correspond to normal-priorityaccess.A processing method is similar to the foregoing procedure, and reference may be made to the foregoing procedure.

Based on the foregoing example, an access network element that meets a requirement may be selected in a radio resource control connection setup procedure to provide a service for a terminal device, so that a user requirement can be better met and user experience can be improved.

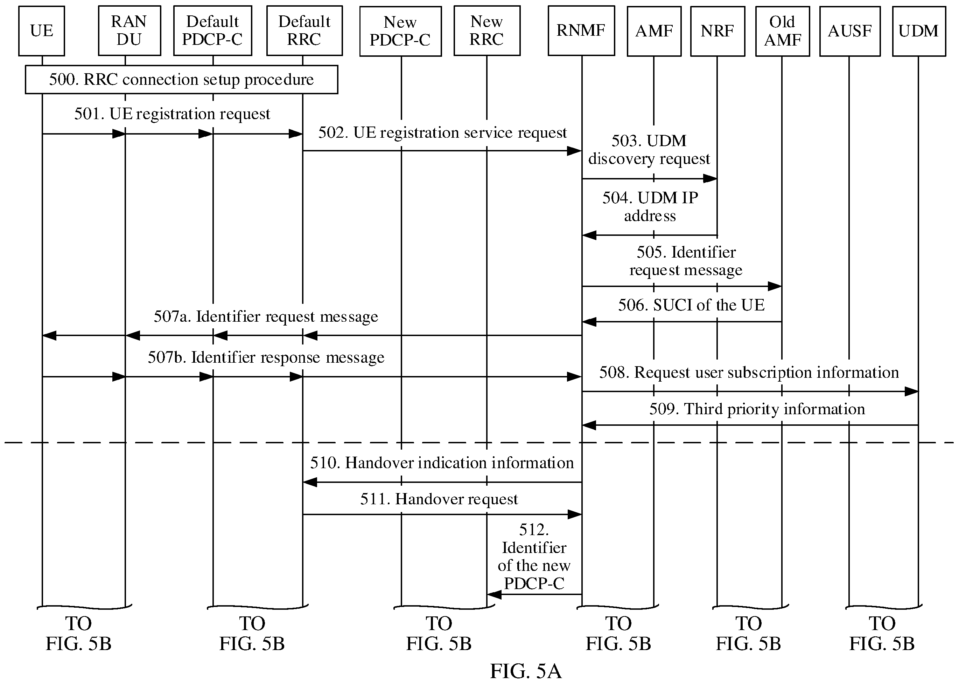

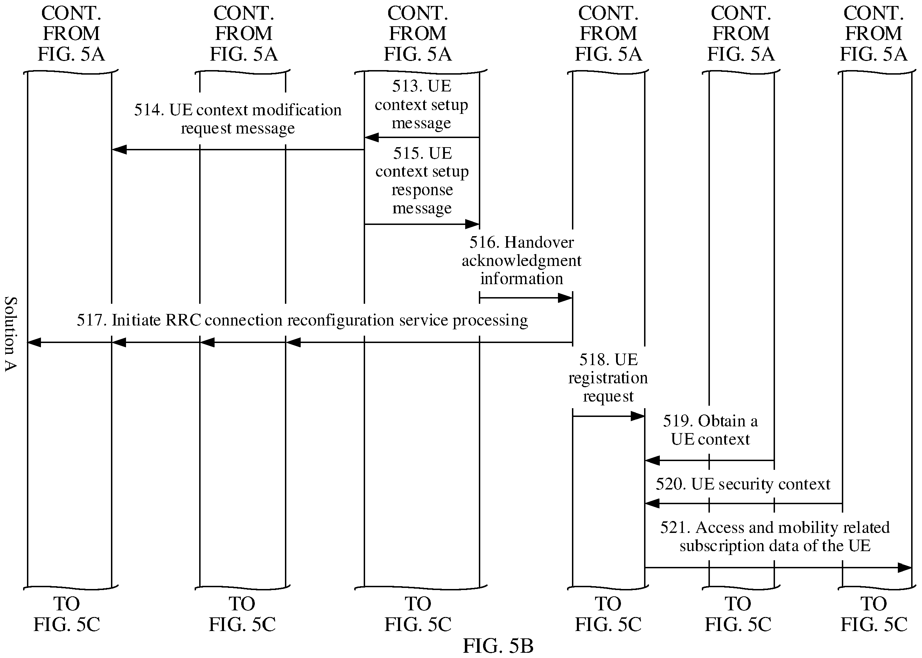

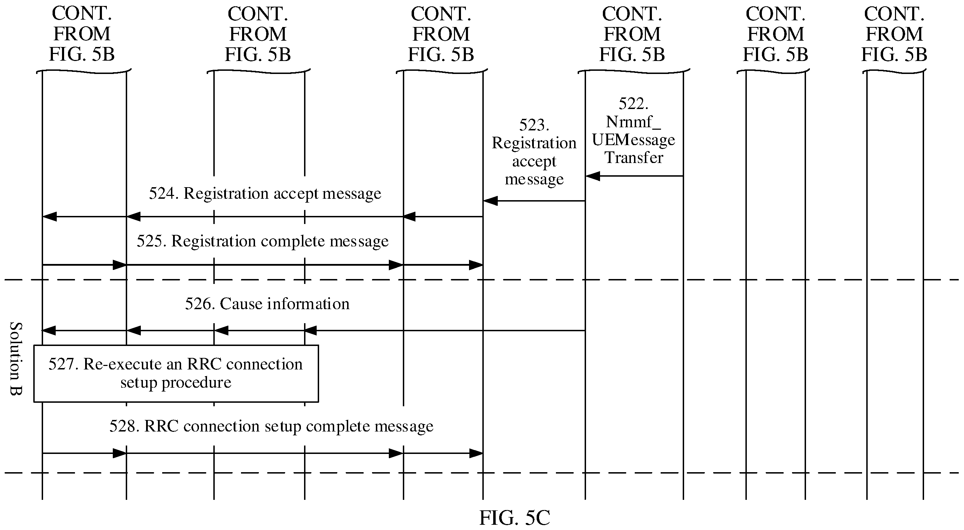

FIG. 5A, FIG. 5B, and FIG. 5C show that a network element selection method provided in an embodiment of this application is applied to a registration procedure of a terminal device. The example procedure may include the following steps.

Step 500: When initially accessing a network, UE requests a RAN network to set up an RRC connection, and selects a default RRC and a default PDCP-C to provide a service for the UE. In other words, the UE initiates an RRC connection setup procedure.

Step 501: The UE initiates a UE registration request (UE Registration request). For example, the UE first sends the UE registration request to a RAN DU, the RAN DU sends the UE registration request to the default PDCP-C, and then the default PDCP-C sends the UE registration request to the default RRC.

For example, the RAN DU, the default PDCP-C, and the default RRC have been selected and determined in an RRC connection setup procedure when the UE initially accesses the network, and a radio resource connection has been set up between the UE and these network elements. Therefore, the UE may directly send the UE registration request by using the RRC connection that has been set up.

In an optional implementation, the UE registration request carries a subscription concealed identifier (subscription concealed identifier, SUCI) or an old 5G-GUTI, a PLMN ID, and a registration request PDU. The registration request PDU is information sent by the UE to a core network, and a RAN side network element only forwards but does not process the information.

Step 502: The default RRC sends a UE registration service request to an RNMF after receiving the UE registration request.

For example, the default RRC may send the UE registration service request to the RNMF by invoking a C1 interface function service Nrnmf_UEMessageTransfer provided by the RNMF. The UE registration service request may carry information such as the PLMN ID, the old 5G-GUTI, a cell ID, and an RAT type. If the UE registration request carries a PLMM list (Equivalent PLMM List), the UE registration service request also carries the equivalent PLMM list. The RAT type is a network RAT that is of an access network on which the UE is camped and that is determined by the default RRC, and a value of the RAT type may be one of GERAN, UTRAN, E-UTRAN, 5G NR, and the like.

Step 503: The RNMF initiates a UDM discovery request to an NRF to query a UMD, where the UDM discovery request carries an identifier of the requested UDM for reference by the NRF to perform the UDM query.

For example, the RNMF may initiate the UDM discovery request to the NRF by using a function service request (NF service request).

For example, after receiving the UE registration service request sent by the default RRC, the RNMF needs to request third priority information in subscription information from the UDM, and then perform step 503.

Step 504: The NRF queries the available UDM based on the identifier of the UDM in the received UDM discovery request of the RNMF, and returns a UDM IP address to the RNMF.

For example, the NRF may send the UDM IP address to the RNMF by using a function service response (NF service response).

Step 505: The RNMF determines, based on an old-5G GUTI, an old AMF (namely, an old AMF) serving the UE, and sends an identifier request (Identification request) message to the old AMF, where the identifier request message carries the old 5G-GUTI.

Step 506: If the old AMF stores an SUCI of the UE, the old AMF sends the SUCI of the UE to the RNMF, and if the old AMF does not store the SUCI of the UE, step 507 is performed.

In an optional implementation, in addition to the method in step 505, the RNMF may determine the old AMF through a query by the NRF. The method is similar to the method for querying the UDM in steps 503 and 504. That is, the RNMF initiates an AMF discovery request to the NRF, and queries the AMF, where the AMF discovery request carries at least one type of information such as the PLMN ID, the cell ID, the RAT type, or the old 5G-GUTI for reference by the NRF to perform the AMF query. The NRF queries the available AMF based on the information in the received AMF discovery request of the RNMF. The NRF first queries, based on the old 5G GUTI, whether the available AMF exists and checks whether the available AMF supports requirements of a current RAT, a PLMN, a cell, and the like. If no AMF meets the requirements, a proper AMF is selected based on information such as the RAT, the PLMN, and the cell, and an available AMF IP address is returned to the RNMF. The RNMF creates a UE context of the UE in the RNMF, and records information received from the default RRC in step 502 such as the PLMN ID, the cell ID, the RAT type, the old 5G-GUTI, and an RRC ID, and the AMF IP address into the UE context.

Step 507a: The RNMF sends an identifier request (Identify request) message to the UE by using the default RRC and the default PDCP-C, to request the UE to return the SUCI.

Step 507b: After receiving the identifier request of the RNMF, the UE returns the SUCI of the UE to the RNMF by using an identifier response (Identify response) message.

Step 508: The RNMF requests user subscription information from the corresponding UDM after obtaining address information of the UDM.

For example, the RNMF may request the user subscription information from the UDM through an Nudm_SDM_Get service provided by the UDM, where the Nudm_SDM_Get service carries a UE ID (in other words, the SUCI).

Step 509: The UDM returns the third priority information (to be specific, a subscriber priority (Subscriber priority)) to the RNMF, where the subscriber priority (Subscriber priority) may be gold, silver, or common.

After the RNMF obtains the subscriber priority, if the subscriber priority is gold or silver, the RNMF reselects an RRC and a PDCP-C (to be specific, the second packet data convergence protocol control plane function network element and the third radio resource control network element in the embodiment shown in FIG. 2) with a high performance level (in other words, a high resource configuration level) for the UE, and determines IP address information (in other words, identifiers) of the RRC and the PDCP-C. In addition, the RNMF needs to transfer a related context of the UE on the default RRC and the default PDCP-C to a new RRC and a new PDCP-C. The following solution A and solution B are two optional solutions for transferring the UE context (for details, refer to descriptions of the following steps). Otherwise, if the subscriber priority is common, the RNMF does not reselect the RRC and PDCP-C function instances, steps 517 to 525 of the solution A are directly performed to complete a UE registration procedure (steps 522 and 523 are sent by the default RRC and PDCP-C function instances when no new RRC/PDCP-C function instance is selected).

### Solution A:

Step 510: The RNMF sends handover indication information to the default RRC, to indicate the default RRC to initiate a handover request.

For example, the RNMF may send the handover indication information to the default RRC by using a handover indication (HO indication) message, where the RNMF adds target cell information (Target ID) for a handover to the handover indication message, and the target ID identifies current location information of the UE.

Step 511: The default RRC sends a handover request (HO request) (to be specific, the first handover request information in the embodiment shown in FIG. 2) to the RNMF, where the handover request carries information such as the target ID, the UE ID (SUCI), and the UE context (UE context). For example, the UE context includes information such as an RRC context and a DU IP address.

Step 512: The RNMF sends an identifier of a new PDCP-C to a selected new RRC.

For example, the RNMF may send the identifier of the new PDCP-C (which may be an IP address of the new PDCP-C) to the new RRC by using a handover request (HO Request). In addition, the handover request may further carry information carried in the handover request in step 509 and an RNMF ID.

Step 513: The new RRC sets up an RRC context for the UE, and sends a UE context setup (UE Context setup) message (to be specific, the context setup request of the terminal device in the embodiment shown in FIG. 2) to the new PDCP-C. The UE context setup message may carry the UE ID, an IP address of the new RRC, an IP address of the RAN DU, and a security context (security context). For example, the IP address of the RAN DU may be an IP address of RLC, MAC, or PHY.

Step 514: The new PDCP-C sends a UE context modification request (UE context modification) to the RAN DU (RLC, MAC, or PHY) after completing configuration, where the UE context modification request carries the UE ID and the IP address of the new PDCP-C.

Step 515: The new PDCP-C sends a UE context setup response (UE Context setup response) message to the new RRC after completing context modification of the RAN DU.

Step 516: The new RRC sends handover acknowledgment information to the RNMF after receiving the response message of the new PDCP-C.

For example, the new RRC may send the handover acknowledgment information to the RNMF by using a handover request acknowledgment (HO request ack) message.

Step 517: The RNMF initiates RRC connection reconfiguration (RRC Connection reconfiguration) service processing to the UE by using the default RRC and the default PDCP-C, and updates system information broadcast (system information broadcast, SIB) information of the new RRC to the UE.

Step 518: The RNMF sends a UE registration request to an AMF.

For example, the RNMF may send the UE registration request to the AMF by invoking an R2 interface function service Nrnmf_N1MessageNotify, where the UE registration request carries information such as a UE registration PDU, the RNMF ID, and at least one type of the following information: the PLMN ID, the cell ID, the RAT type, and the SUCI. The RNMF ID is allocated by the RNMF or planned and configured by the network. The RNMF ID identifies the RNMF (for example, the RNMF ID may be an RNMF IP address) and supports service message routing.

Step 519: The AMF obtains the UE context from the old AMF.

For example, after receiving the UE registration request, the AMF parses the UE registration PDU in the UE registration request to obtain related information. If the related information carries the old 5G-GUTI, the AMF sends a query request to the NRF to obtain address information of the old AMF, and the NRF queries, based on the old 5G GUTI, whether an available AMF exists. If yes, the NRF sends an IP address of the old AMF to the AMF. The AMF requests the UE context from the old AMF by invoking a function service Namf_Communicaiton_UEContextTransfer provided by the old AMF. If the old AMF stores the UE context, the old AMF may send the UE context to the AMF by invoking a provided function service Namf_Communicaiton_UEContextTransfer reponse service. Step 520: The AMF requests an AUSF to authenticate the UE, and receives a UE security context from the AUSF.

Then, the AMF initiates access stratum (access stratum, AS) and non-access stratum (Non-access stratum, NAS) security procedures to activate an AS/NAS security mechanism.

Step 521: The AMF requests access and mobility related subscription data of the UE from the UDM.

For example, the AMF may request the access and mobility related subscription data of the UE through the Nudm_SDM_Get service provided by the UDM.

Step 522: The AMF sends information such as a registration accept PDU (Registration Accept PDU), a 5G-global unique temporary identity (global unique temporary identity, GUTI), a handover restriction list (Handover restriction List), a UE aggregate maximum bit rate (per UE aggregate maximum bit rate, UE-AMBR), and an AMF ID to the RNMF after completing registration related processing of the UE.

For example, the AMF may send the foregoing information to the RNMF by invoking an R2 interface function service Nrnmf_UEMessageTransfer service provided by the RNMF. The 5G-GUTI is a new identifier allocated by the AMF to the UE. The AMF ID may be a GUAMI or another ID identifier that uniquely identifies the AMF.

Step 523: The RNMF records the information received from the AMF into the UE context, and sends a registration accept message to the new RRC.

For example, the RNMF stores the newly allocated 5G-TURI, handover restriction list, UE-AMBR, and AMF ID, and serving location area information of the AMF in the UE context, and sends the registration accept message (UE registration accept) to the RRC function instance by invoking the Nrnmf_N1MessageNotify service, where the registration accept message may carry the G-GUTI and the UE-AMBR.

Step 524: The new RRC sends the registration accept message (UE registration accept) to the UE by using the new PDCP-C and the RAN DU function.

Step 525: The UE returns a registration complete (Registration Complete) message after receiving the registration accept message. For example, the UE sends the registration complete (Registration Complete) message to the new RRC by using the RAN DU and the new PDCP-C function in sequence.

### Solution B:

Step 526: The RNMF rejects the UE registration request, and sends cause information to the UE by using the default RRC and the default PDCP-C, where the cause information is used to indicate the terminal device to resend a radio resource control connection request that carries a high subscriber priority.

For example, the RNMF may send the cause information by sending a registration reject (Registration reject) message to the UE by using the default RRC and the default PDCP-C. The registration reject message carries the UE ID and the cause information (cause with RRC-re-setup using Highpriorityaccess), and cause with RRC-re-setup using Highpriorityaccess is used to notify the UE that if the registration request is rejected, RRC connection setup is re-initialized, and the RRC connection setup is requested in a high-priority access manner (that is, the RRC connection request carries an indication of Highpriorityaccess (to be specific, the high subscriber priority in the embodiment shown in FIG. 2)).

In an implementation, the RNMF needs to store context information of the UE, including information such as the UE ID and a subscriber priority.

Step 527: The UE resends an RRC connection request (RRC Connection request) message, where the message carries an RRC setup request cause (cause with RRC-re-setup) and a high priority access indication (Highpriorityaccess indication) (for normal UE (that is, UE that does not request to re-initiate the RRC connection request on a network side), a cause value RRC-re-setup is not carried in the RRC connection request). In other words, the UE re-executes an RRC connection setup procedure.

For example, when the UE accesses the network at a high subscriber priority, the RRC and the PDCP-C with a high performance level may be selected according to the method in the example shown in FIG. 4A, FIG. 4B, and FIG. 4C. Therefore, for subsequent to-be-performed operations, refer to steps 406 to 412 in the example shown in FIG. 4A, FIG. 4B, and FIG. 4C. The first priority information is replaced with the third priority information herein.

In an optional implementation, in step 406, the RNMF receives reporting of the default RRC, and needs to verify validity of the UE, that is, determine whether a subscriber priority corresponding to the UE context stored in the RNMF is a high subscriber priority, to check whether high-priority access is allowed for the UE.

Step 528: The UE completes related configuration of the UE, returns an RRC connection setup complete (RRC connection complete) message to a new RRC function instance through the RAN DU and a new PDCP-C, adds a UE registration PDU to the RRC connection setup complete message, and re-initiates a UE registration procedure.

After step 528, the new RRC receives the UE registration request, and may perform steps 517 to 525 of the solution A to complete the registration of the UE.

Based on the foregoing example, an access network element that meets a requirement may be selected in a registration procedure of a terminal device to provide a service for the terminal device, so that a user requirement can be better met and user experience can be improved.

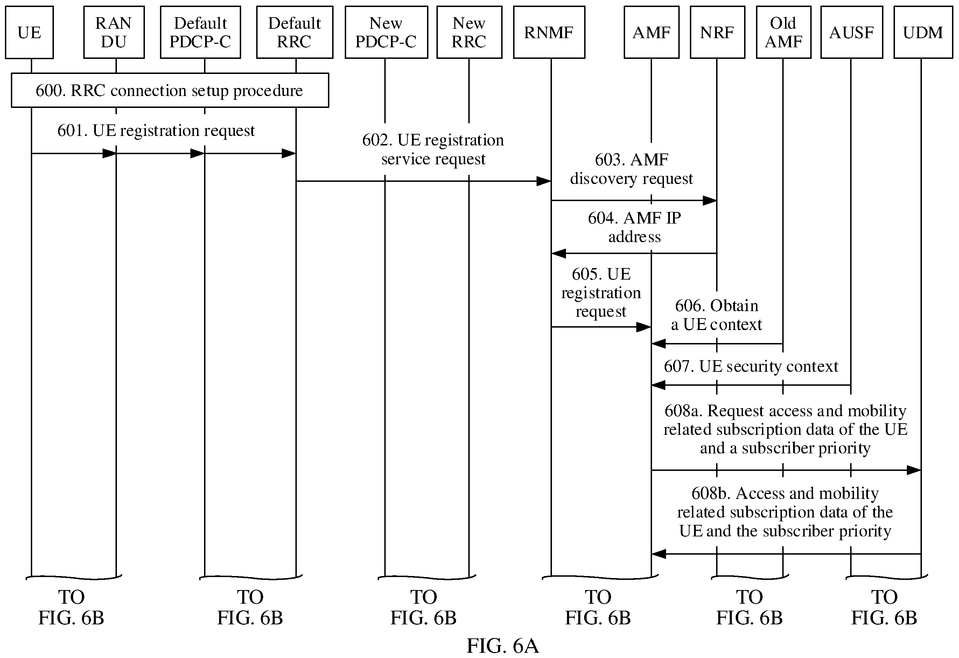

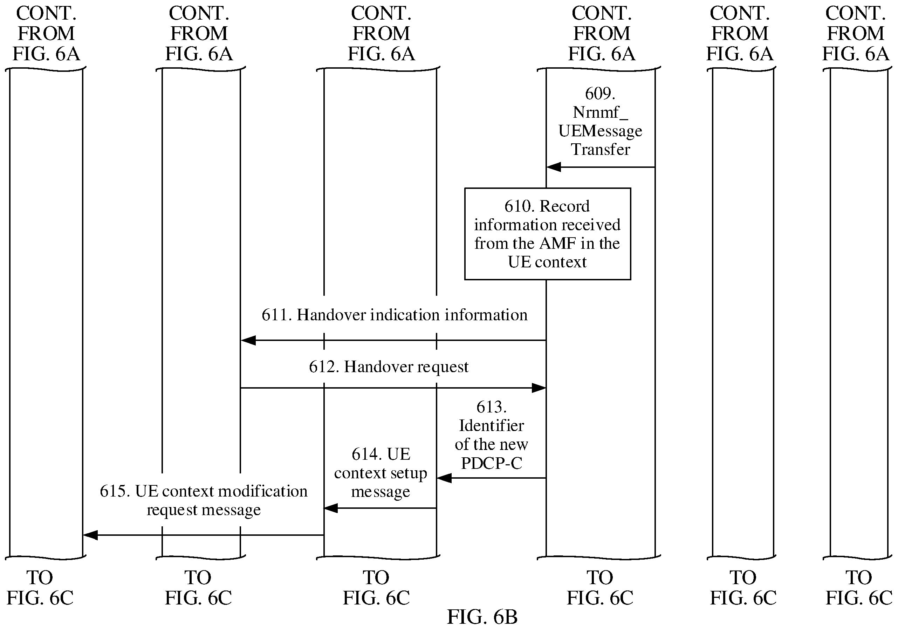

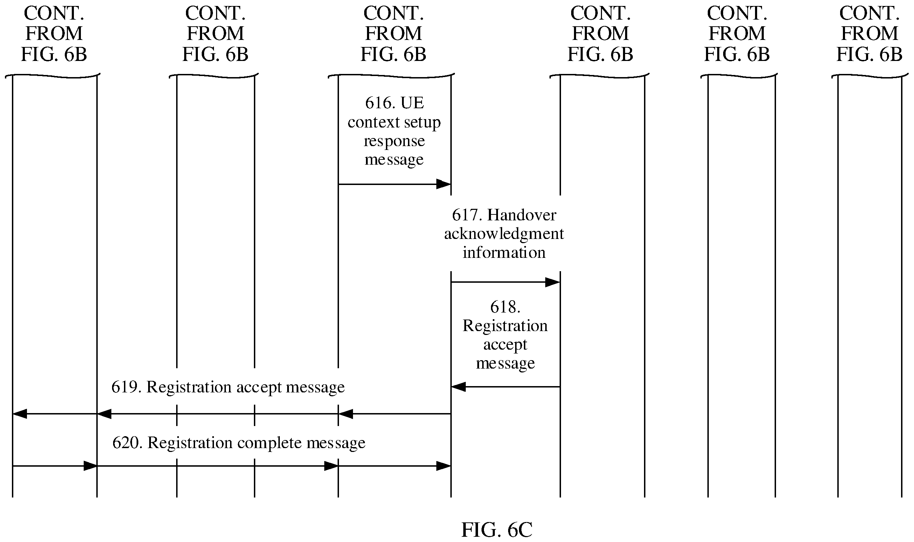

FIG. 6A, FIG. 6B, and FIG. 6C show that a network element selection method provided in an embodiment of this application is applied to a registration procedure of a terminal device. The example procedure may include the following steps.

Step 600 to step 602 are similar to step 500 to step 502. For descriptions, refer to the descriptions of step 500 to step 502. Details are not described herein again.

Step 603: The RNMF initiates an AMF discovery request to an NRF to query an AMF, where the AMF discovery request carries at least one type of information such as a PLMN ID, a cell ID, a RAT type, or an old 5G-GUTI for reference by the NRF to perform the AMF query.

For example, the RNMF may initiate the AMF discovery request to the NRF by using a function service request (NF service request).

For example, after receiving the UE registration service request sent by the RRC, the RNMF needs to send the UE registration service request to the AMF, and then perform step 603.

Step 604: The NRF queries the available AMF based on information in the received AMF discovery request of the RNMF, and returns an available AMF IP address to the RNMF.

For example, the NRF first queries, based on the old 5G GUTI, whether the available AMF exists, and checks whether the available AMF supports requirements of a current RAT, a PLMN, a cell, and the like. If no AMF meets the requirements, a proper AMF is selected as the available AMF based on information such as the RAT, the PLMN, and the cell.

In an optional implementation, the NRF may send the AMF IP address to the RNMF by using a function service response (NF service response).

After step 604, the RNMF creates a UE context of the UE in the RNMF, and records information received from the default RRC such as the PLMN ID, the cell ID, the RAT Type, the old 5G-GUTI, and an RRC ID, and the AMF IP address into the UE context.

Step 605 and step 606 are similar to step 518 and step 519. For descriptions, refer to the descriptions of step 518 and step 519. Details are not described herein again.

Step 607: The AMF requests an AUSF to authenticate the UE, and receives a UE security context from the AUSF.

Then, the AMF initiates AS and NAS security procedures to activate an AS/NAS security mechanism through the default RRC and the default PDCP-C.

Step 608a: The AMF requests access and mobility related subscription data of the UE and a subscriber priority (Subscriber priority) (third priority information) from the UDM.

For example, the AMF requests the access and mobility related subscription data of the UE and the subscriber priority through an Nudm_SDM_Get service provided by the UDM.

Step 608b: The UDM sends the access and mobility related subscription data of the UE and the subscriber priority to the AMF.

Step 609: After completing UE registration related processing, the AMF sends information such as a registration accept PDU, the subscriber priority, a 5G-GUTI, a handover restriction list, a UE-AMBR, and an AMF ID to the RNMF.

For example, the AMF may send the foregoing information to the RNMF by invoking an R2 interface function service Nrnmf_UEMessageTransfer service provided by the RNMF. The 5G-GUTI is a new identifier allocated by the AMF to the UE. The AMF ID may be a GUAMI or another ID identifier that uniquely identifies the AMF.

Step 610: The RNMF records information received from the AMF into the UE context. For example, the RNMF stores the newly allocated 5G-TURI, handover restriction list, UE-AMBR, and AMF ID, and serving location area information of the AMF in the UE context.

In addition, the RNMF determines, based on the subscriber priority in step 609, whether RRC and PDCP-C reselection needs to be performed. If the subscriber priority is gold or silver, the RNMF reselects RRC and PDCP-C function instances with a high performance level for the UE, and determines identifiers of a new RRC and a new PDCP-C (for example, IP address information of the new RRC and the new PDCP-C). In addition, the RNMF needs to transfer UE-related contexts on the default RRC and the default PDCP-C to the new RRC and the new PDCP-C, and the UE context transfer may be performed by using the method described in the foregoing solution A.

For example, for steps 611 to 617, refer to the related descriptions of steps 510 to 516. Details are not described herein again.

For steps 618 to 620, refer to the related descriptions of step 523 to step 525. Details are not described herein again.

Based on the foregoing example, an access network element that meets a requirement may be selected in a registration procedure of a terminal device to provide a service for the terminal device, so that a user requirement can be better met and user experience can be improved.

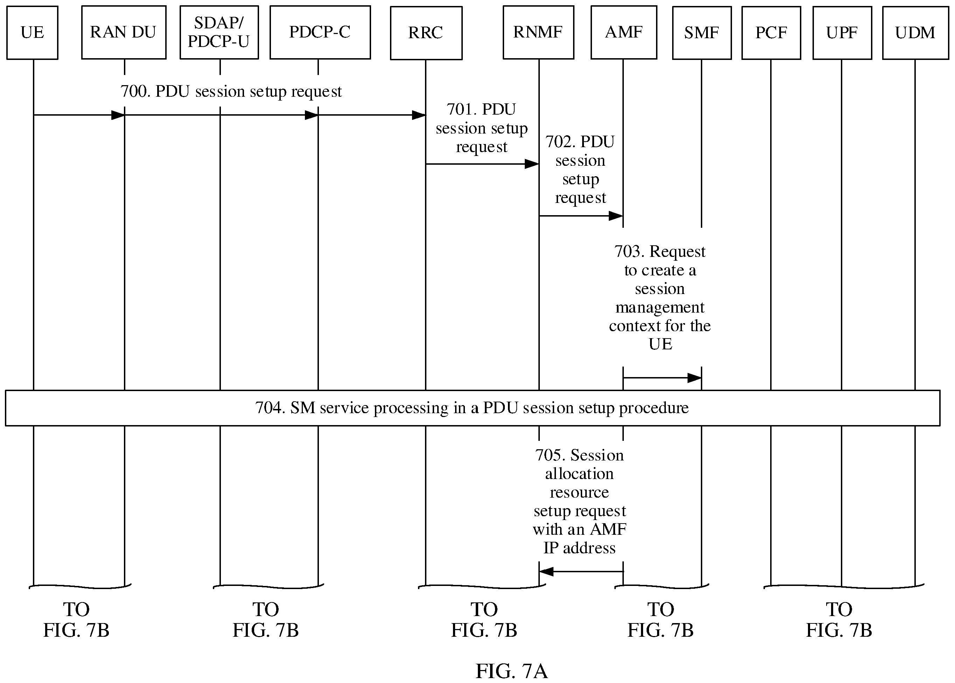

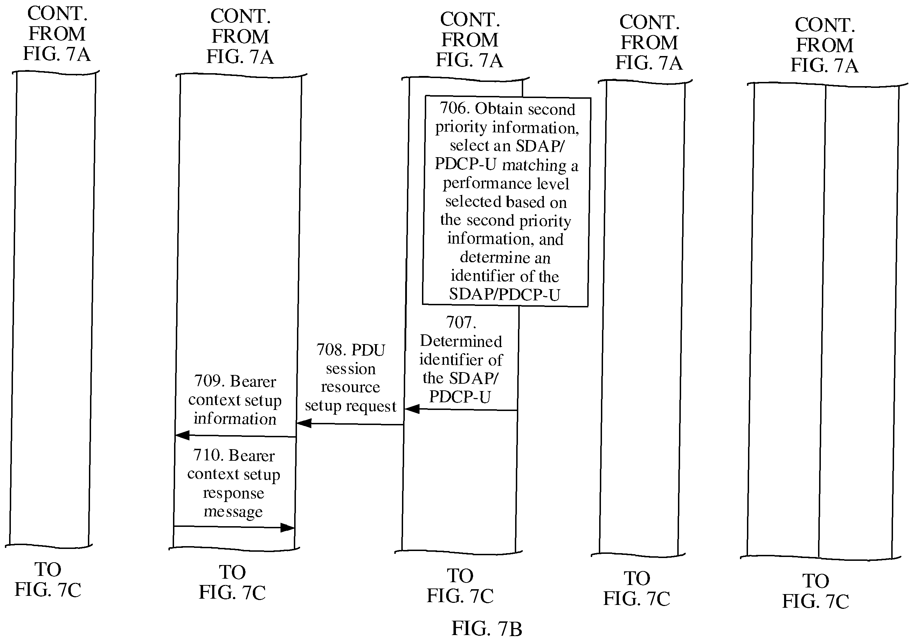

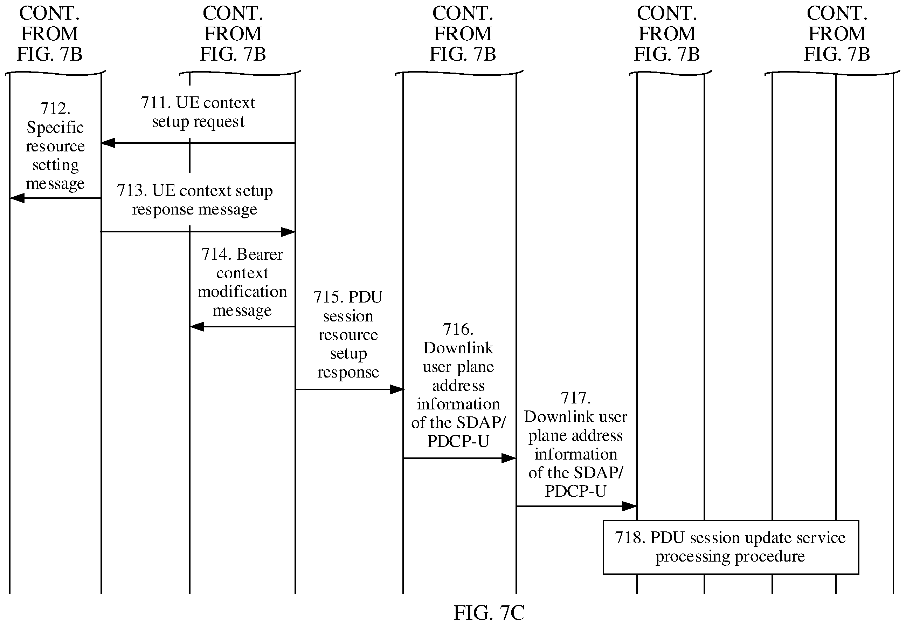

FIG. 7A, FIG. 7B, and FIG. 7C show that a network element selection method provided in an embodiment of this application is applied to a packet data unit session setup procedure (PDU session setup procedure). The example procedure may include the following steps.

Step 700: UE sends a PDU session setup request (PDU session Setup request) to an RRC by using a RAN DU and a PDCP-C.

Step 701: The RRC sends the PDU session setup request to an RNMF.

For example, the RRC may initiate the PDU session setup request to the RNMF by invoking a C1 interface function service Nrnmf_ UEMessageTransfer provided by the RNMF. The PDU session setup request carries a NAS PDU (PDU session Setup request) and a 5G-GUTI.

Step 702: The RNMF sends the PDU session setup request to an AMF.

For example, the RNMF may send the PDU session setup request to the AMF by using an R2 interface function service Nrnmf_N1MessageNotify, where the PDU session setup request carries the NAS PDU (PDU session Setup request), the 5G-GUTI, and an RNMF ID.

Step 703: The AMF requests an SMF to create a session management (Session Management, SM) context for the UE.

For example, the AMF may request the SMF to send a request to create the SM context for the UE by invoking a PDU Session_CreateSMContext service provided by the SMF.

Step 704: Perform SM service processing in a PDU session setup procedure.

Step 705: The AMF sends a session allocation resource setup request to the RNMF after the SM service processing is completed.

For example, the AMF may request to initiate the PDU session setup procedure on the RAN side by invoking an R2 interface function service Nrnmf_AllocateSessionResource provided by the RNMF, or in other words, send the session allocation resource setup request to the RNMF by invoking Nrnmf_AllocateSessionResource. The session allocation resource setup request carries a PDU session setup accept (PDU session setup accept (encapsulated in the NAS PDU)), a UE ID, and a PDU session resource setup list (PDU Session resource setup list).

For example, the PDU session resource setup list is a parameter configuration set of one or more PDU sessions that are requested to be set up, including a PDU session ID and a PDU session resource setting request transfer (PDU Session resource setup request transfer). The PDU session resource setup request transfer includes information such as a PDU session resource aggregate maximum bit rate (PDU session resource Aggregate Maximum Bit Rate), an uplink NG interface user plane address ((Uplink NG-user plane, UL NG-U) Address), a PDU session type (PDU Session type), a security indication (Security indication) (for example, the security indication indicates whether encryption is enabled and/or whether integrity protection is enabled), a quality of service (quality of service, QoS) flow identifier (QoS flow ID, QFI), a QoS flow level (QoS flow level), and a QoS flow parameter (QoS parameters).

Step 706: After receiving the session allocation resource setup request sent by the AMF, the RNMF parses the QoS parameter to obtain second priority information (in other words, a service priority (Service priority)), selects, based on the service priority, an SDAP/PDCP-U matching a performance level, and determines an identifier (for example, an IP address) of the corresponding SDAP/PDCP-U.

For example, when the second priority information is a high service priority, the RNMF selects an SDAP/PDCP-U corresponding to the high service priority.

Step 707: The RNMF sends the identifier of the determined SDAP/PDCP-U to the RRC.

For example, in step 706, when the RNMF selects the SDAP/PDCP-U, a plurality of SDAP/PDCP-Us matching the service priority may appear. In this case, if there are a plurality of high-level SDAP/PDCP-Us, the RNMF sends identifiers of all matched SDAP/PDCP-Us (in other words, an SDAP/PDCP-U IP address list) to the RRC in step 707.

For example, the RNMF may request, by invoking a C1 interface function service Arrc_PDUSessionResource_setup provided by RRC, the RAN to allocate a PDU session resource, where the service request carries the identifiers of the plurality of determined SDAP/PDCP-Us (for example, the SDAP/PDCP-U IP address list), and further carries the information in step 705, and the RNMF locally stores PDU session context information.

Currently, 14 levels are defined for service priorities. In an optional implementation, mapping division between these levels and SDAP/PDCP-U performance levels is performed, and service priorities 0.5, 0.7, and 1 are allocated to SDAP/PDCP-Us requiring a high performance level, and service priorities 2, 2.5, 3, and 4 are allocated to SDAP/PDCP-Us requiring a common performance level. It should be noted that the mapping division method is merely an example division solution, but is not limited to this division solution.

Step 708: The RRC allocates a data radio bearer identifier ((date radio bearer, DRB) ID), and sends a PDU session resource setup request (PDU session resource setup request) to the PDCP-C, where the PDU session resource setup request carries a DRB ID and the information in step 707.

Step 709: The PDCP-C sends bearer context setup information to an SDAP/PDCP-U (to be specific, the fourth service data adaptation protocol/packet data convergence protocol user plane function in the embodiment shown in FIG. 2).

For example, after receiving the DU session resource setup request, the PDCP-C parses the PDU session resource setup list, and further parses the PDU session resource setup request transfer, to obtain related parameter configuration information of a PDU session that is requested to be set up, including information such as the PDU session resource aggregate maximum bit rate, the UL NG-U address (in other words, UL GTP TEID and IP of UPF), the PDU session type, the security indication, the QFI, the QoS flow level, and the QoS parameters.

The PDCP-C selects and determines an SDAP/PDCP-U from an SDAP/PDCP-U list identified by the SDAP/PDCP-U IP address list based on information about another factor (for example, a serving cell), and performs step 709. For example, the PDCP-C may send the bearer context setup information to the SDAP/PDCP-U by using a bearer context setup (Bearer context setup) message, where the bearer context setup message carries the DRB ID, the PDU session resource AMBR, the UL NG-U Address (for example, UL GTP TEID and IP address of UPF), and the security indication (a value of the security indication is required (required), preferred (preferred), or not needed (not needed)).

Step 710: The SDAP/PDCP-U allocates a downlink NG-U address (for example, a DL GTP TEID and IP address) and an uplink UL SDAP/PDCP-U TEID and IP address, performs resource configuration based on a parameter in bearer context setup information, and returns a bearer context setup response (Bearer context setup response) message to the PDCP-C, where the bearer context setup response message carries the DRB ID, the DL NG-U address (for example, the DL GTP TEID and IP address), and a security result (a value of the security result is performed or not performed).

In an optional implementation, the PDCP-C needs to repeatedly perform step 709 and step 710 if a plurality of DRBs need to be set up. In step 710, for different DRBs, the RNMF may need to select a plurality of different SDAP/PDCP-Us.

Step 711: The PDCP-C sends a UE context setup request (UE context setup request) message to the RAN DU, and performs resource configuration on the RAN DU, where the message carries the PDU session setup accept, the DRB ID, the QoS, and the UL SDAP/PDCP-U GTP TEID and IP.

Step 712: The RAN DU sends a specific resource setting (AN specific resource setup) message to the UE, where the message carries the PDU session setup accept.

Step 713: The RAN DU sends a UE context setup response (UE context setup response) message to the PDCP-C after receiving a determination message of the UE, where the message carries the DRB ID and the DL DU address (for example, the DL GTP TEID and IP address).

Step 714: The PDCP-C sends a bearer context modification (Bearer Context modification) message to the SDAP/PDCP-U, and updates the DL DU address (DL GTP TEID and IP address) in the UE context, where the message carries the DRB ID and the DL DU address (for example, the DL GTP TEID and IP address).

Step 715: The PDCP-C sends a PDU session resource setup response (PDU session resource setup response) message to the RRC, where the message carries the PDU session ID and downlink user plane address information DL NG-U address (for example, a DL SDAP/PDCP-U GTP TEID and IP address) corresponding to the SDAP/PDCP-U.

Step 716: The RRC sends the downlink user plane address information DL NG-U address (for example, the DL SDAP/PDCP-U GTP TEID and IP address) of the SDAP/PDCP-U to the RNMF.

For example, the RRC may send the downlink user plane address information DL NG-U address (for example, the DL SDAP/PDCP-U GTP TEID and IP address) of the SDAP/PDCP-U to the RNMF by invoking a C1 interface session modification function service Nrnmf_Communication_ModifySessionResource provided by the RNMF.

Step 717: The RNMF sends the downlink user plane address information DL NG-U address (for example, the DL SDAP/PDCP-U GTP TEID and IP address) of the SDAP/PDCP-U to the AMF.

For example, the RNMF may send the downlink user plane address information DL NG-U address (for example, the DL SDAP/PDCP-U GTP TEID and IP address) of the SDAP/PDCP-U to the AMF by invoking an R2 interface session modification function service Namf_Communication_ModifyPDUSessionNotify provided by the AMF.

Step 718: Perform a PDU session update service processing procedure.

Based on the foregoing example, when the RNMF selects the SDAP/PDCP-U, step 706 may be replaced with step 706a: The RNMF selects a matched SDAP/PDCP-U based on first priority information (UE priority) or third priority information (Subscriber priority) locally stored by the RNMF, and determine an identifier (for example, an IP address) of the corresponding SDAP/PDCP-U.

For example, in an RRC connection setup procedure of the terminal device, the RNMF has learned that the UE is accessed at a high priority (in other words, it has learned that the first priority information is a high priority). Therefore, in the PDU session setup procedure, the RNMF may select and determine the SDAP/PDCP-U based on the locally stored UE priority in this step. Similarly, in a registration procedure of the terminal device, the RNMF has learned the subscriber priority (in other words, the third priority information). Therefore, in the PDU session setup procedure, the RNMF may select and determine the SDAP/PDCP-U based on the locally stored subscriber priority in this step.

It should be noted that, only step 706 is shown as an example in the figure, and step 706a is not shown. However, step 706 in the figure may be replaced with step 706a to form a new solution.

Based on the foregoing example, an access network element that meets a requirement may be selected in a packet data unit session setup procedure (PDU session setup procedure) to provide a service for a terminal device, so that a user requirement can be better met and user experience can be improved.

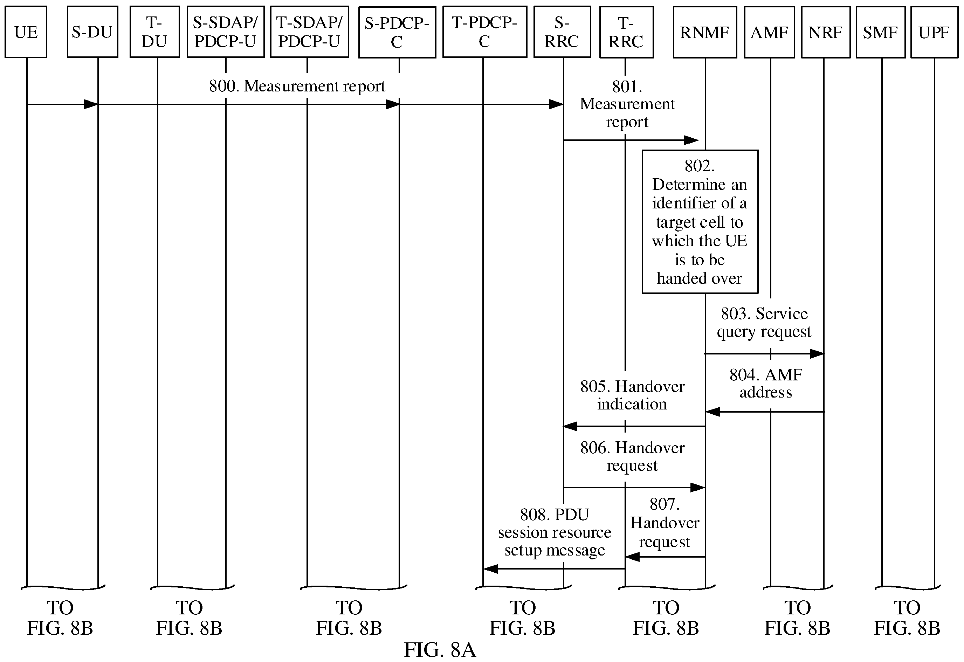

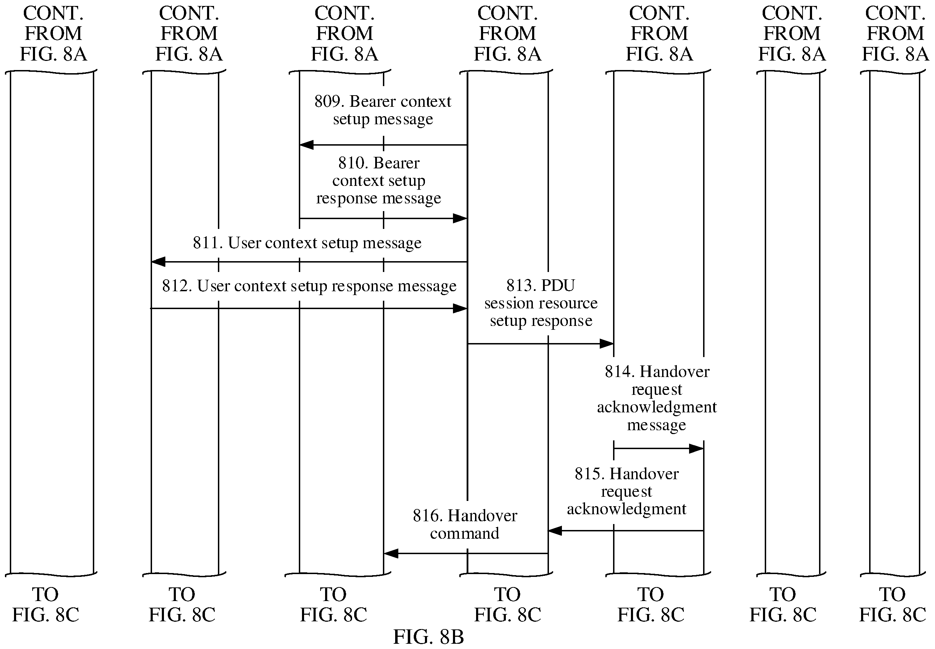

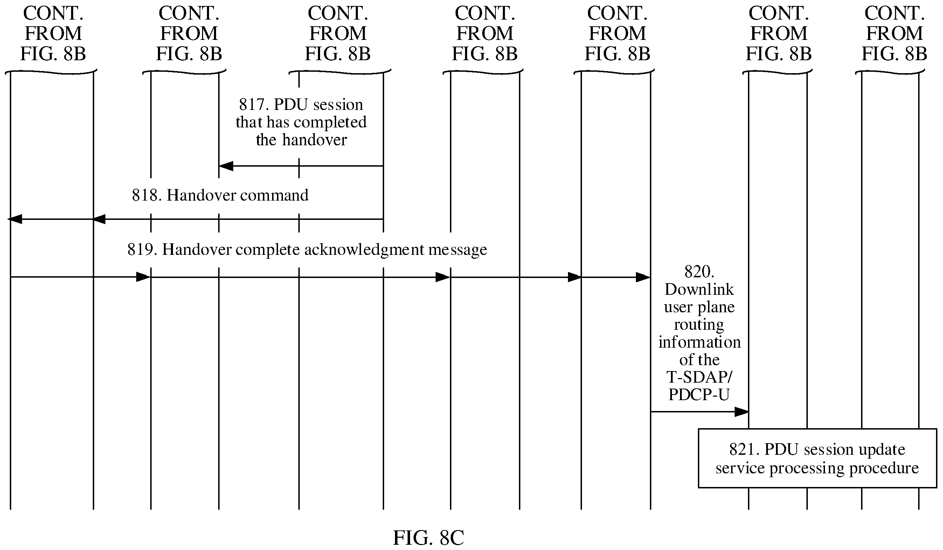

FIG. 8A, FIG. 8B, and FIG. 8C show that a network element selection method provided in an embodiment of this application is applied to a network handover procedure of a terminal device. The example procedure may include the following steps.

Step 800: UE completes signal measurement, and reports a measurement report to a source RRC (S-RRC for short below) by using a source RAN DU (S-DU for short below) and a source PDCP-C S-PDCP-C for short below).

Step 801: The S-RRC reports the measurement report to an RNMF.

For example, the S-RRC may report the measurement report to the RNMF by invoking a C1 interface function service Nrnmf_Communication_UEMessageTransfer provided by the RNMF. The measurement report may include information such as a measurement type (Measurement type) (for example, reference signal received power (reference signal received power, RSRP), reference signal received quality (reference signal received quality, RSRQ), or a reference signal time difference (reference signal time difference, RSTD)), a measurement period, and a frequency (measurement period and number of frequencies).

Step 802: The RNMF determines, based on the measurement report reported by the S-RRC function instance, that handover processing needs to be performed on the UE, and further determines an identifier (target ID) of a target cell to which the UE is to be handed over.

The RNMF determines, based on the target ID, that the current RRC needs to be changed, and that the RNMF and an AMF do not need to be changed.

Optionally, the RNMF may select a target RRC (T-RRC for short below), a target PDCP-C (T-PDCP-C for short below), and a target SDAP/PDCP-U (T-SDAP/PDCP-U for short below) based on the target ID and locally stored priority information (for example, a UE priority (in other words, first priority information), a subscriber priority (in other words, third priority information), or a service priority (in other words, second priority information)), and separately determine identifiers (for example, address information) of the target RRC, the target SDAP/PDCP-U, and the target SDAP/PDCP-U. For example, because the UE has set up an RRC connection or has undergone a registration procedure, the RNMF has set up a related context for the UE, and stores priority information in the context.

Step 803: If the RNMF cannot determine whether the AMF changes in step 802, step 803 is performed. The RNMF sends a service query request (NF service request) to the NRF, where a queried NF type is the AMF, and the NRF selects an AMF that can serve a cell identified by the target ID. Then, step 804 is performed.

Step 804: The NRF returns an address of the selected and determined AMF (AMF IP address) to the RNMF.

Step 805: The RNMF sends a handover indication (HO indication) to the S-RRC, to indicate the S-RRC to initiate an HO request, and the RNMF adds the target ID to be handed over to the handover indication.

Step 806: After receiving the handover indication from the RNMF, the S-RRC sends a handover request (HO request) to the RNMF, and adds information such as the target ID, a UE ID, a globally unique AMF ID (globally unique AMF ID, GUAMI), and a UE context to the handover request.

For example, the UE context includes information such as a UE-AMBR, security information (AS Security information) (key Key), a PDU session resource to be setup list, an RRC context, and a mobility restriction list (Mobility Restriction List). The PDU session resource to be setup list is configuration information of a PDU session that needs to be re-set up, including parameter information such as a PDU session ID, a PDU session resource AMBR, a UL NG-U address, a security indication, a PDU session type, and QoS.

In an optional implementation, if the RNMF does not locally store the UE context, in step 804, the RNMF cannot determine whether the address of the AMF returned by the NRF is the same as an address of the AMF that previously serves the UE. If the RNMF does not locally store AMF status information, whether the AMF changes may be determined by determining, after the RNMF receives the HO request sent by the S-RRC, whether the AMF identified by the GUAMI in the message is the same as the AMF returned by the NRF in step 804.

Step 807: The RNMF sends a handover request (HO Request) to the T-RRC, where the handover request carries information such as the target ID, the UE ID, a PDCP-C IP address, and an SDAP/PDCP-U IP address list.

The handover request may further carry information such as the GUAMI and the UE context.

In a possible implementation, the RNMF directly performs step 807 if the RNMF has determined the T-RRC in step 802. If the RNMF does not select or determine the T-RRC, the T-PDCP-C, and the T-SDAP/PDCP-U in step 802, the RNMF first selects and determines the T-RRC, the T-PDCP-C, and the T-SDAP/PDCP-U based on the target ID and the locally stored priority information, and then performs step 807.

Step 808: The T-RRC sets up an RRC context for the UE, allocates a DRB ID to a PDU session, selects the T-PDCP-C based on the target ID, sends a PDU session resource setup (PDU Session resource setup) message to the T-PDCP-C, and performs resource configuration related to the PDU session, where the PDU session resource setup message carries the target ID, the UE ID, and the PDU session resource to be setup list (the parameter set includes DRB ID information corresponding to each PDU session).

Step 809: The T-PDCP-C receives the PDU session resource setup message, and parses the PDU session resource to be setup list to obtain related parameter configuration information of the PDU session that is requested to be set up, including information such as the PDU session resource AMBR, the UL NG-U address, the PDU session type, the security indication, a QFI, a QoS flow level, and QoS parameters.

The T-PDCP-C selects and determines, based on another factor (for example, a serving cell), a T-SDAP/PDCP-U from an SDAP/PDCP-U list identified by the SDAP/PDCP-U IP address list, and sends a bearer context setup (Bearer context setup) message to the T-SDAP/PDCP-U, where the bearer context setup message carries the DRB ID, the PDU session resource AMBR, the UL NG-U address (for example, a UL GTP TEID and IP address), and the security indication (a value of the security indication is required, preferred, or not needed).

Step 810: The T-SDAP/PDCP-U allocates a downlink NG-U address (for example, a DL GTP TEID and IP address), an uplink UL SDAP/PDCP-U TEID and IP address, and a forward GTP TEID and IP, and performs resource configuration.

The forward GTP TEID and IP is used by the S-SDAP/PDCP-U to transmit, through a forwarding tunnel that is set up with the T-SDAP/PDCP-U, a user data packet that has not been sent to the UE to the T-SDAP/PDCP-U for buffering and forwarding during handover processing.

The T-SDAP/PDCP-U completes resource configuration, and sends a bearer context setup response (Bearer context setup response) message to the T-PDCP-C, where the message carries the DRB ID and the DL NG-U address (for example, the DL GTP TEID and IP address), the UL SDAP/PDCP-U TEID and IP address, the forward GTP TEID and IP, and a security result (a value of the security result is performed or not performed).

If a plurality of DRBs need to be set up, the PDCP-C function instance needs to repeatedly perform steps 809 and 810. In step 809, for different DRBs, the RNMF may need to select a plurality of different SDAP/PDCP-Us.

Step 811: The T-PDCP-C sends a user context setup (UE Context UE setup request) message to a T-DU, and performs resource configuration on the T-DU, where the message carries the DRB ID, the QoS, and the UL SDAP/PDCP-U GTP TEID and IP.

Step 812: After completing resource configuration, the T-DU returns a user context setup response (UE Context UE setup response) message to the T-PDCP-C, where the message carries the DRB ID, and the DL DU GTP TEID and IP.

Step 813: The T-PDCP-C sends a PDU session resource setup response (PDU Session resource setup response) to the T-RRC, to confirm that resource configuration is completed, where the PDU session resource setup response carries the PDU session ID, the DL NG-U address, and the forward GTP TEID and IP.

Step 814: The T-RRC sends a handover request acknowledgment (HO Request Ack) message to the RNMF after receiving the PDU session resource setup response of the T-PDCP-C, where the handover request acknowledgment message carries the UE ID, a PDU session resource admitted list, and a target to source transparent container. The PDU session resource admitted list is information about a PDU session that is successfully handed over, including information such as the PDU session ID and data forwarding Info from target node (in other words, Forward GTP TEID and IP).

Step 815: The RNMF sends a handover request acknowledgment (HO Request Ack) message to the S-RRC, where the handover request acknowledgment message carries the information in step 814.

Step 816: The S-RRC determines that the target cell has completed handover processing, and sends a handover command (HO command) to the S-PDCP-C, where the handover command carries the UE ID and the PDU session resource admitted list.

Step 817: The S-PDCP-C notifies the S-SDAP/PDCP-U of the PDU session (PDU session) that has completed the handover, and sends forwarding tunnel address information (Forward GTP TEID and IP) to the S-SDAP/PDCP-U, and the S-SDAP/PDCP-U may forward user data that has not been sent to the UE to the T-SDAP/PDCP-U based on the forwarding tunnel address (Forward GTP TEID and IP).

Step 818: The S-PDCP-C sends a handover command (HO command) to the S-DU, forwards the handover command (HO command) to the UE by using the S-DU, and notifies the UE to perform RRC reconfiguration, to synchronize with the target cell.

Step 819: After completing synchronization processing, the UE sends a handover complete (HO complete) acknowledgment message to the T-RRC by using the T-DU and the T-PDCP-C. The T-RRC forwards the message to the RNMF to confirm that handover processing on the RAN side is completed.

Step 820: After receiving the acknowledgment message from the T-RRC, the RNMF may initiate path switching on a core network side, and the RNMF sends downlink user plane routing information DL NG-U Address (for example, the DL GTP TEID and IP address) of the T-SDAP/PDCP-U to the AMF.

For example, the RNMF may send the downlink user plane routing information DL NG-U Address (for example, the DL GTP TEID and IP address) of the T-SDAP/PDCP-U to the AMF by invoking a path update service path switch provided by the AMF.

Step 821: The AMF notifies the SMF to initiate PDU session update processing, to enter a PDU session update processing procedure.

It should be noted that the foregoing steps describe only a handover scenario in which a network element on the RAN side changes but the RNMF and the AMF do not change. For another handover scenario, for example, a scenario in which the network element on the RAN side and the RNMF change but the AMF does not change or a scenario in which the network element on the RAN side, the RNMF, and the AMF change, service procedures of handover processing are different, but a processing process of selecting the RRC, the PDCP-C, and the SDAP/PDCP-U by the RNMF based on priority information is the same as the foregoing steps 802, 807, and 808. Therefore, service processing procedures in other handover scenarios are not described in detail in this embodiment of this application.

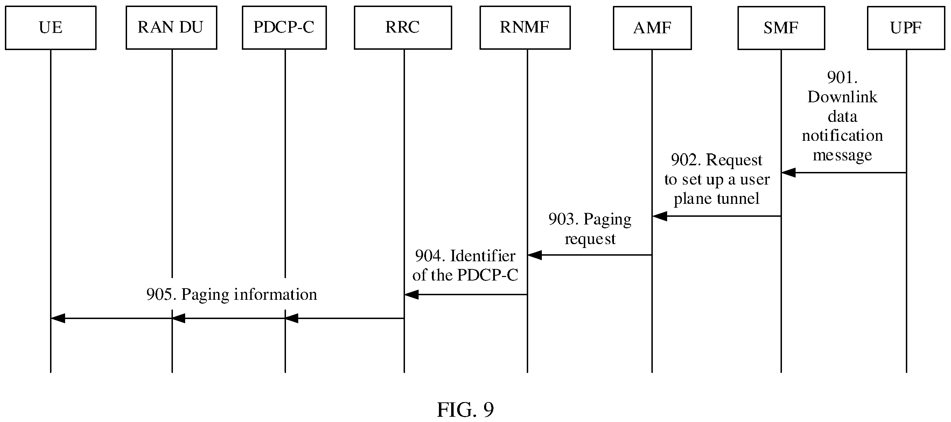

Based on the foregoing example, an access network element that meets a requirement may be selected in a network handover procedure of a terminal device to provide a service for the terminal device, so that a user requirement can be better met and user experience can be improved.FIG. 9 shows that a network element selection method provided in an embodiment of this application is applied to a procedure in which a terminal device is in an idle state and is paged. The example procedure may include the following steps.

Step 901: When a UPF receives downlink user data that needs to be sent to UE in an idle (IDLE) mode, if the UPF receives the downlink data but there is no downlink tunnel information on the UPF, the UPF sends a downlink data notification (Data Notification) message to an SMF.

Step 902: The SMF receives the downlink data notification from the UPF, and requests an AMF to set up a user plane tunnel.

For example, the SMF may request to set up the user plane tunnel by invoking an Namf_communication_N1N2MessageTranfer service of the AMF.

Step 903: The AMF sends a paging request to an RNMF when the AMF receives a signaling request that is of the SMF and that is about the idle UE or a signaling request of another NF (for example, a PCF or a UDM).

For example, the AMF may send the paging request to the RNMF by invoking an R2 interface function service provided by the RNMG. The paging request carries a non-access stratum identifier for paging (NAS ID for paging), a paging priority indication (Paging Priority indication), a registration area list (Registration area list), a service type, and a UE priority. The paging priority indication includes an allocation and retention priority (allocation and retention priority, ARP) and a paging priority level, and the service type is a service type, for example, a data network name (data network name, DNN).

Step 904: The RNMF selects an RRC and a PDCP-C, separately determines identifiers (for example, IP addresses) of the RRC and the PDCP-C, and sends the identifier of the PDCP-C to the RRC.

For example, the RNMF selects the RRC and the PDCP-C based on a priority of the UE, or may select the RRC and the PDCP-C based on a location registration area list or service information service type in the message sent by the AMF.

The RNMF may send the identifier of the PDCP-C to the RRC by invoking a C1 interface function service Nrrc_Communication_C1MessageTransfer provided by the RRC. For example, the RNMF may send a paging message to the RRC. The paging message carries the NAS ID for paging, the paging priority indication, and the PDCP-C IP address, and the paging priority indication includes the ARP and the paging priority level.

Step 905: The RRC sends paging information (Paging message) to the UE by using the PDCP-C. For example, the RRC first sends the paging information to the PDCP-C, and the PDCP-C sends the paging information to the UE by using a RAN-DU.

Based on the foregoing example, an access network element that meets a requirement may be selected in a procedure in which the terminal device is in an idle mode and is paged to provide a service for the terminal device, so that a user requirement can be better met and user experience can be improved.

In the foregoing embodiments provided in this application, the solutions of the network element selection method provided in the embodiments of this application are separately described from a perspective of the network elements or devices and from a perspective of interaction between the network elements or devices. It may be understood that, to implement the foregoing functions, the network elements and devices such as the first network element and the access network element (including a packet data convergence protocol control plane function network element, a service data adaptation protocol/packet data convergence protocol user plane function network element, or a radio resource control network element) include corresponding hardware structures and/or software modules for performing the functions. A person skilled in the art should easily be aware that, in combination with the examples described in the embodiments disclosed in this application, units and algorithm steps may be implemented by hardware or a combination of hardware and computer software in this application. Whether a function is performed by hardware or hardware driven by computer software depends on particular applications and design constraints of the technical solutions. The person skilled in the art may use different methods to implement the described functions for each particular application, but it should not be considered that the implementation goes beyond the scope of this application.

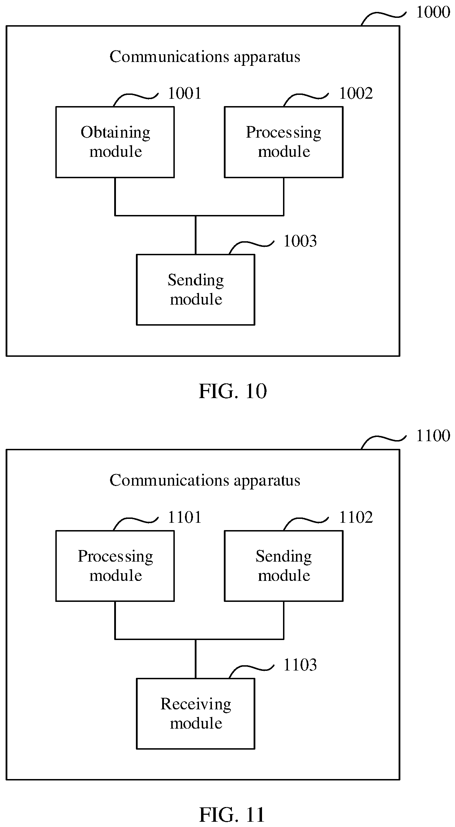

For example, when the network element or the device implements a corresponding function by using a software module, a communications apparatus (a communications apparatus for network element selection) provided in an embodiment of this application may include an obtaining module 1001 and a processing module 1002, and optionally, may further include a sending module 1003. Reference may be made to a schematic structural diagram shown in FIG. 10. It should be noted that in this embodiment of this application, when the obtaining module is configured to receive only information or data, the obtaining module may alternatively be a receiving module. When the obtaining module is configured to obtain information or data locally stored in the communications apparatus, the obtaining module may alternatively be a processing module.

In an embodiment, the communications apparatus shown in FIG. 10 may be configured to perform an operation performed by the first network element in the embodiments shown in FIG. 2 and FIG. 3, and configured to perform an operation performed by the RNMF in the embodiments shown in FIG. 4A, FIG. 4B, and FIG. 4C to FIG. 9. For example,
the obtaining module 1001 is configured to obtain first information of an access network element, and obtain second information. For example, the first information is used to indicate a resource configuration level of the access network element. The second information includes one or more of first priority information, second priority information, or third priority information. The first priority information is used to indicate a priority of a terminal device, the second priority information is used to indicate a service priority, and the third priority information is used to indicate a subscriber priority. The processing module 1002 is configured to determine, based on the first information and the second information, the access network element to provide a service for the terminal device. In an optional implementation, the access network element is one or more of a packet data convergence protocol control plane function network element, a service data adaptation protocol/packet data convergence protocol user plane function network element, or a radio resource control network element.

Therefore, based on the foregoing communications apparatus, the access network element whose resource configuration level matches the second information (priority information) may be selected to provide a service for the terminal device. In this way, selection of the access network element is relatively flexible, so that a user requirement can be better met, thereby improving user experience.

In an optional implementation, when obtaining the second information, the obtaining module 1001 is configured to receive the first priority information from a first radio resource control network element. Correspondingly, when determining, based on the first information and the second information, the access network element to provide the service for the terminal device, the processing module 1002 is configured to: if the first priority information is a high priority, and the first information indicates that resource configuration levels of a first packet data convergence protocol control plane function network element and a second radio resource control network element are high, determine the first packet data convergence protocol control plane function network element and the second radio resource control network element to each provide a service for the terminal device.

In a possible implementation, the sending module 1003 is configured to send an identifier of the first packet data convergence protocol control plane function network element, an identifier of the second radio resource control network element, and redirection indication information to the first radio resource control network element, where the redirection indication information is used to indicate the first radio resource control network element to send the identifier of the first packet data convergence protocol control plane function network element and a radio resource control connection setup request of the terminal device to the second radio resource control network element. In another possible implementation, the obtaining module 1001 is further configured to receive a radio resource control connection request of the terminal device from the first radio resource control network element. The sending module 1003 is configured to send an identifier of the first packet data convergence protocol control plane function network element and the radio resource control connection request of the terminal device to the second radio resource control network element.

In another optional implementation, when obtaining the second information, the obtaining module 1001 is configured to: obtain the third priority information from a unified data management function network element, or obtain the third priority information from an access and mobility management function network element. In an optional implementation, the third priority information is obtained by the access and mobility management function network element from the unified data management function network element. Correspondingly, when determining, based on the first information and the second information, the access network element to provide the service for the terminal device, the processing module 1002 is configured to: if the third priority information is a high subscriber priority, and the first information indicates that resource configuration levels of a second packet data convergence protocol control plane function network element and a third radio resource control network element are high, determine the second packet data convergence protocol control plane function network element and the third radio resource control network element to each provide a service for the terminal device.

In an example implementation, the sending module 1003 is configured to send handover indication information to a fourth radio resource control network element, where the handover indication information is used to indicate the fourth radio resource control network element to initiate a handover request. The obtaining module 1001 is further configured to receive first handover request information from the fourth radio resource control network element. The sending module 1003 is further configured to send an identifier of the second packet data convergence protocol control plane function network element to the third radio resource control network element, so that the third radio resource control network element creates a radio resource control context of the terminal device, and sends a context setup request of the terminal device to the second packet data convergence protocol control plane function network element.

In a possible manner, the obtaining module 1001 is further configured to receive handover acknowledgment information from the third radio resource control network element after the sending module 1003 sends the identifier of the second packet data convergence protocol control plane function network element to the third radio resource control network element, where the handover acknowledgment information is sent after the third radio resource control network element receives a context setup response from the second packet data convergence protocol control plane function network element. For example, the context setup response is sent after the second packet data convergence protocol control plane function network element modifies a context of the terminal device on an access network distributed unit. The sending module 1003 is further configured to send radio resource control reconfiguration request information to the terminal device by using the fourth radio resource control network element and a third packet data convergence protocol control plane function network element, so that a context of the terminal device on the third radio resource control network element is updated to the terminal device.

In another example implementation, the sending module 1003 is further configured to send cause information to the terminal device by using a fifth radio resource control network element and a fourth packet data convergence protocol control plane function network element, where the cause information is used to indicate the terminal device to resend a radio resource control connection request that carries the high subscriber priority.

In still another optional implementation, when obtaining the second information, the obtaining module 1001 is configured to receive the second priority information from an access and mobility management function network element. Correspondingly, when determining, based on the first information and the second information, the access network element to provide the service for the terminal device, the processing module 1002 is configured to: if the second priority information is a high service priority, and the first information indicates that a resource configuration level of a first service data adaptation protocol/packet data convergence protocol user plane function network element is high, determine the first service data adaptation protocol/packet data convergence protocol user plane function network element to provide a service for the terminal device.

In yet another optional implementation, when obtaining the second information, the obtaining module 1001 is configured to obtain the first priority information or the third priority information from the first network element. Correspondingly, when determining, based on the first information and the second information, the access network element to provide the service for the terminal device, the processing module 1002 is configured to: if the first priority information is a high priority, and the first information indicates that a resource configuration level of a second service data adaptation protocol/packet data convergence protocol user plane function network element is high, determine the second service data adaptation protocol/packet data convergence protocol user plane function network element to provide a service for the terminal device; or if the third priority information is a high subscriber priority, and the first information indicates that a resource configuration level of a third service data adaptation protocol/packet data convergence protocol user plane function network element is high, determine the third service data adaptation protocol/packet data convergence protocol user plane function network element to provide a service for the terminal device.

In a possible implementation, the sending module 1003 is configured to send an identifier of a determined service data adaptation protocol/packet data convergence protocol user plane function network element to a sixth radio resource control network element. In this way, the sixth radio resource control network element subsequently sends packet data unit session resource setup request information to a fifth packet data convergence protocol control plane function network element, so that the fifth packet data convergence protocol control plane function network element sends bearer context setup information to a fourth service data adaptation protocol/packet data convergence protocol user plane function network element. The packet data unit session resource setup request information includes the identifier of the determined service data adaptation protocol/packet data convergence protocol user plane function network element, and the fourth service data adaptation protocol/packet data convergence protocol user plane function network element is one of determined service data adaptation protocol/packet data convergence protocol user plane function network elements.

In still another optional implementation, the processing module 1002 is further configured to determine an identifier of a target cell to which the terminal device is to be handed over. When obtaining the second information, the obtaining module 1001 is configured to obtain target priority information from the first network element based on the identifier of the target cell, where the target priority information is the first priority information, the second priority information, or the third priority information. Correspondingly, when determining, based on the first information and the second information, the access network element to provide the service for the terminal device, the processing module 1002 is configured to determine, based on the first information and the second information (that is, the target priority information), a sixth packet data convergence protocol control plane function network element, a fifth service data adaptation protocol/packet data convergence protocol user plane function network element, and a seventh radio resource control network element to each provide a service for the terminal device.

In still another optional implementation, when obtaining the second information, the obtaining module 1001 is configured to obtain the first priority information from an access and mobility management function network element. Correspondingly, when determining, based on the first information and the second information, the access network element to provide the service for the terminal device, the processing module 1002 is configured to: determine, based on the first information and the second information (the first priority information herein), a seventh packet data convergence protocol control plane function network element and an eighth radio resource control network element to each provide a service for the terminal device.

In a possible implementation, the sending module 1003 is configured to send an identifier of the seventh packet data convergence protocol control plane function network element to the eighth radio resource control network element, so that the eighth radio resource control network element sends paging information to the terminal device by using the seventh packet data convergence protocol control plane function network element.

In addition, based on the obtaining module 1001, the processing module 1002, and optionally, the sending module 1003 in the communications apparatus, another operation or function of the first network element in the foregoing method may be further implemented. Details are not described herein again.

For another example, when the network element or the device implements a corresponding function by using a software module, the communications apparatus provided in this embodiment of this application may further include a processing module 1101 and a sending module 1102, and optionally, may further include a receiving module 1103. Reference may be made to a schematic structural diagram shown in FIG. 11.

In an embodiment, a communications apparatus shown in FIG. 11 may be configured to perform an operation performed by the access network element in the embodiments shown in FIG. 2 and FIG. 3, and may be configured to perform an operation performed by the new PDCP-C in the embodiments shown in FIG. 4A, FIG. 4B, and FIG. 4C to FIG. 6A, FIG. 6B, and FIG. 6C, an operation performed by the PDCP-C in the embodiments shown in FIG. 7A, FIG. 7B, and FIG. 7C and FIG. 9, and an operation performed by the T-PDCP-C in the embodiment shown in FIG. 8A, FIG. 8B, and FIG. 8C. For example,
the processing module 1101 is configured to determine a first network element. The sending module 1102 is configured to register first information with the first network element, where the first information is used to indicate a resource configuration level of an access network element.

Therefore, based on the foregoing communications apparatus, the access network element may register the first information with the first network element, so that the first network element obtains the resource configuration level of the access network element, and subsequently the first network element may select an access network element with a proper resource configuration level to provide a service for a terminal device.

In an optional implementation, the access network element (namely, the communications apparatus) is one or more of a packet data convergence protocol control plane function network element, a service data adaptation protocol/packet data convergence protocol user plane function network element, or a radio resource control network element.

In an optional implementation, when the communications apparatus is a second radio resource control network element (namely, the second radio resource control network element in the embodiment shown in FIG. 2), the receiving module 1103 is configured to receive an identifier of a first packet data convergence protocol control plane function network element (namely, the first packet data convergence protocol control plane function network element in the embodiment shown in FIG. 2) and a radio resource control connection setup request of the terminal device from a first radio resource control network element (namely, the first radio resource control network element in the embodiment shown in FIG. 2). A resource configuration level of the second radio resource control network element is high, and the second radio resource control network element provides a service for the terminal device.

In addition, based on the processing module 1101, the sending module 1102, and optionally, the receiving module 1103 in the communications apparatus, another operation or function of the access network element in the foregoing method may be further implemented. Details are not described herein again.

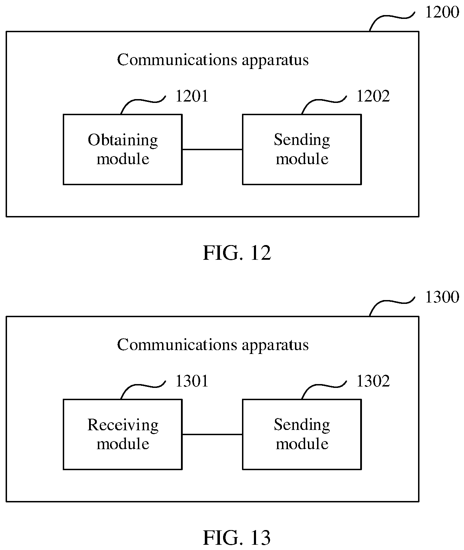

For another example, when the network element or the device implements a corresponding function by using a software module, a communications apparatus provided in an embodiment of this application may further include an obtaining module 1201 and a sending module 1202. Reference may be made to a schematic structural diagram shown in FIG. 12.

In an embodiment, a communications apparatus shown in FIG. 12 may be configured to perform an operation performed by the first radio resource control network element in the embodiment shown in FIG. 2, and may be configured to perform an operation performed by the default RRC in the embodiment shown in FIG. 4A, FIG. 4B, and FIG. 4C. For example,
the obtaining module 1201 is configured to obtain a radio resource control connection setup request of a terminal device. The sending module 1202 is configured to send first priority information to a first network element, where the first priority information is used to indicate a priority of the terminal device.

Therefore, based on the foregoing communications apparatus, the first priority information may be reported to the first network element, so that the first network element subsequently selects an access network element matching the first priority information to provide a service for the terminal device.

In an optional implementation, when the first priority information is a high priority, the obtaining module 1201 is further configured to receive an identifier of a first packet data convergence protocol control plane function network element (namely, the first packet data convergence protocol control plane function network element in the embodiment shown in FIG. 2), an identifier of a second radio resource control network element (namely, the second radio resource control network element in the embodiment shown in FIG. 2), and redirection indication information from the first network element, where the redirection indication information is used to indicate the first radio resource control network element to send the identifier of the first packet data convergence protocol control plane function network element and the radio resource control connection setup request of the terminal device to the second radio resource control network element. The sending module 1202 is further configured to send the identifier of the first packet data convergence protocol control plane function network element and the radio resource control connection setup request of the terminal device to the second radio resource control network element. For example, if resource configuration levels of the first packet data convergence protocol control plane function network element and the second radio resource control network element are high, the first packet data convergence protocol control plane function network element and the second radio resource control network element each provide a service for the terminal device.

In another optional implementation, when the first priority information is a high priority, the sending module 1202 is further configured to send the radio resource control connection setup request of the terminal device to the first network element, so that the first network element sends an identifier of a first packet data convergence protocol control plane function network element and the radio resource control connection request of the terminal device to a second radio resource control network element. For example, if a resource configuration level of the first packet data convergence protocol control plane function network element is high, the first packet data convergence protocol control plane function network element provides a service for the terminal device.

In addition, based on the obtaining module 1201 and the sending module 1202 in the communications apparatus, another operation or function of the first radio resource control network element in the foregoing method may be further implemented. Details are not described herein again.

For another example, when the network element or the device implements a corresponding function by using a software module, a communications apparatus provided in an embodiment of this application may further include a receiving module 1301 and a sending module 1302. Reference may be made to a schematic structural diagram shown in FIG. 13.

In an embodiment, a communications apparatus shown in FIG. 13 may be configured to perform an operation performed by the fourth radio resource control network element in the embodiment shown in FIG. 2, and may be configured to perform an operation performed by the default RRC in the embodiment shown in FIG. 5A, FIG. 5B, and FIG. 5C. For example,
the receiving module 1301 is configured to receive handover indication information from a first network element, where the handover indication information is used to indicate a first radio resource control network element (namely, the fifth radio resource control network element in the embodiment shown in FIG. 2) to initiate a handover request. The sending module 1302 is configured to send first handover request information to the first network element, so that the first network element sends an identifier of a packet data convergence protocol control plane function network element (namely, the second packet data convergence protocol control plane function network element in the embodiment shown in FIG. 2) to a second radio resource control network element (namely, the third radio resource control network element in the embodiment shown in FIG. 2), so that the second radio resource control network element creates a radio resource control context of a terminal device, and sends a context setup request of the terminal device to the packet data convergence protocol control plane function network element. For example, if resource configuration levels of the second radio resource control network element and the packet data convergence protocol control plane function network element are high, the second radio resource control network element and the packet data convergence protocol control plane function network element each provide a service for the terminal device.

Therefore, based on the foregoing communications apparatus, an access network element with a relatively high resource configuration level may subsequently provide a service for the terminal device, thereby meeting a user requirement and improving user experience.

In addition, based on the receiving module 1301 and the sending module 1302 in the communications apparatus, another operation or function of the fourth radio resource control network element in the foregoing method may be further implemented. Details are not described herein again.

In another embodiment, a communications apparatus shown in FIG. 13 may be configured to perform an operation performed by the fifth radio resource control network element in the embodiment shown in FIG. 2, and may be configured to perform an operation performed by the default RRC in the embodiment shown in FIG. 5A, FIG. 5B, and FIG. 5C. For example,
the receiving module 1301 is configured to receive cause information from a first network element, where the cause information is used to indicate a terminal device to resend a radio resource control connection request that carries a high subscriber priority. The sending module 1302 is configured to send the cause information to a packet data convergence protocol control plane function network element (namely, the fourth packet data convergence protocol control plane function network element in the embodiment shown in FIG. 2), so that the packet data convergence protocol control plane function network element sends the cause information to the terminal device.

Therefore, based on the foregoing communications apparatus, the terminal device may re-initiate a radio resource control connection procedure, and select, in the radio resource control connection procedure, an access network element matching the high subscriber priority to provide a service for the terminal device, thereby meeting a user requirement and improving user experience.

In addition, based on the receiving module 1301 and the sending module 1302 in the communications apparatus, another operation or function of the fifth radio resource control network element in the foregoing method may be further implemented. Details are not described herein again.

In another embodiment, a communications apparatus shown in FIG. 13 may be configured to perform an operation performed by the sixth radio resource control network element in the embodiment shown in FIG. 2, and may be configured to perform an operation performed by the RRC in the embodiment shown in FIG. 7A, FIG. 7B, and FIG. 7C. For example,
the receiving module 1301 is configured to receive an identifier of a service data adaptation protocol/packet data convergence protocol user plane function network element (namely, the determined service data adaptation protocol/packet data convergence protocol user plane function network element in the embodiment shown in FIG. 2) from a first network element. The sending module 1302 is configured to send packet data unit session resource setup request information to a packet data convergence protocol control plane function network element (namely, the fifth packet data convergence protocol control plane function network element in the embodiment shown in FIG. 2). The packet data unit session resource setup request information includes the identifier of the service data adaptation protocol/packet data convergence protocol user plane function network element, so that the packet data convergence protocol control plane function network element sends a bearer context setup message to the service data adaptation protocol/packet data convergence protocol user plane function network element. For example, if a resource configuration level of the service data adaptation protocol/packet data convergence protocol user plane function network element is high, the service data adaptation protocol/packet data convergence protocol user plane function network element provides a service for a terminal device.

Therefore, based on the foregoing communications apparatus, an access network element with a high resource configuration level may provide a service for the terminal device, thereby meeting a user requirement and improving user experience.

In addition, based on the receiving module 1301 and the sending module 1302 in the communications apparatus, another operation or function of the sixth radio resource control network element in the foregoing method may be further implemented. Details are not described herein again.

It should be noted that, division into units or modules in the embodiments of this application is an example, and is merely logical function division. In actual implementation, another division manner may be used. Functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the current technology, or all or some of the technical solutions may be implemented in the form of a software product. The software product is stored in a storage medium and includes several instructions for instructing a computer device (which may be a personal computer, a server, or a network device) or a processor (processor) to perform all or some of the steps of the methods that are in the embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

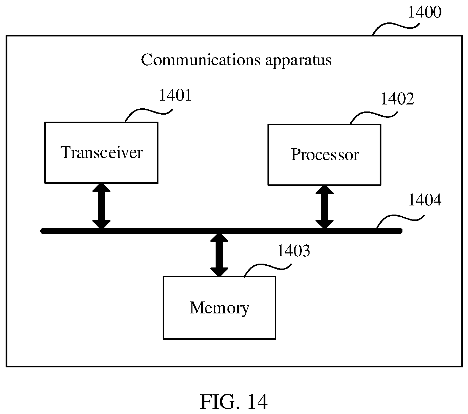

For another example, when the network element or the device implements a corresponding function by using hardware, a communications apparatus (a communications apparatus for network element selection) provided in this application may include a transceiver 1401 and a processor 1402, and optionally, may further include a memory 1403. Reference may be made to a structural diagram shown in FIG. 14.

For example, the processor 1402 may be a central processing unit (central processing unit, CPU), a network processor (network processor, NP), a combination of a CPU and an NP, or the like. The processor 1402 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable logic gate array (field-programmable gate array, FPGA), a generic array logic (generic array logic, GAL), or any combination thereof. The processor 1402 may implement the foregoing functions by hardware or certainly by hardware executing corresponding software.

The transceiver 1401 and the processor 1402 are connected to each other. Optionally, the transceiver 1401 and the processor 1402 are connected to each other through a bus 1404. The bus 1404 may be a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, and the like. For ease of representation, only one thick line is used to represent the bus in FIG. 14, but this does not mean that there is only one bus or only one type of bus.

The memory 1403 is coupled to the processor 1402, and is configured to store a program and the like that are necessary to the communications apparatus. For example, the program may include program code, and the program code includes a computer operation instruction. The memory 1403 may include a RAM, and may further include a non-volatile memory (non-volatile memory), for example, at least one magnetic disk memory. The processor 1402 executes an application program stored in the memory 1403, to implement functions of the communications apparatus.

In an embodiment, the communications apparatus shown in FIG. 14 may be configured to perform an operation performed by the first network element in the embodiments shown in FIG. 2 and FIG. 3, and configured to perform an operation performed by the RNMF in the embodiments shown in FIG. 4A, FIG. 4B, and FIG. 4C to FIG. 9. For example,
the transceiver 1401 is configured to implement communication interaction with another device or network element connected to the first network element (for example, an RNMF), that is, configured to receive and send data. The processor 1402 is configured to perform another operation or function of the first network element (for example, the RNMF).

In another embodiment, the communications apparatus shown in FIG. 14 may be configured to perform an operation performed by the access network element in the embodiments shown in FIG. 2 and FIG. 3, and may be configured to perform an operation performed by the new PDCP-C in the embodiments shown in FIG. 4A, FIG. 4B, and FIG. 4C to FIG. 6A, FIG. 6B, and FIG. 6C, an operation performed by the PDCP-C in the embodiments shown in FIG. 7A, FIG. 7B, and FIG. 7C and FIG. 9, and an operation performed by the T-PDCP-C in the embodiment shown in FIG. 8A, FIG. 8B, and FIG. 8C. For example,
the transceiver 1401 is configured to implement communication interaction with another device or network element connected to the access network element (for example, a PDCP-C), that is, configured to receive and send data. The processor 1402 is configured to perform another operation or function of the access network element (for example, the PDCP-C).

In another embodiment, a communications apparatus shown in FIG. 14 may be configured to perform an operation performed by the first radio resource control network element in the embodiment shown in FIG. 2, and may be configured to perform an operation performed by the default RRC in the embodiment shown in FIG. 4A, FIG. 4B, and FIG. 4C. For example,
the transceiver 1401 is configured to implement communication interaction with another device or network element connected to the first radio resource control network element (for example, an RRC), that is, configured to receive and send data. The processor 1402 is configured to perform another operation or function of the first radio resource control network element (for example, the RRC).

In another embodiment, a communications apparatus shown in FIG. 14 may be configured to perform an operation performed by the fourth radio resource control network element in the embodiment shown in FIG. 2, and may be configured to perform an operation performed by the default RRC in the embodiment shown in FIG. 5A, FIG. 5B, and FIG. 5C. For example,
the transceiver 1401 is configured to implement communication interaction with another device or network element connected to the fourth radio resource control network element (for example, an RRC), that is, configured to receive and send data. The processor 1402 is configured to perform another operation or function of the fourth radio resource control network element (for example, the RRC).

In another embodiment, a communications apparatus shown in FIG. 14 may be configured to perform an operation performed by the fifth radio resource control network element in the embodiment shown in FIG. 2, and may be configured to perform an operation performed by the default RRC in the embodiment shown in FIG. 5A, FIG. 5B, and FIG. 5C. For example,
the transceiver 1401 is configured to implement communication interaction with another device or network element connected to the fifth radio resource control network element (for example, an RRC), that is, configured to receive and send data. The processor 1402 is configured to perform another operation or function of the fifth radio resource control network element (for example, the RRC).

In another embodiment, a communications apparatus shown in FIG. 14 may be configured to perform an operation performed by the sixth radio resource control network element in the embodiment shown in FIG. 2, and may be configured to perform an operation performed by the RRC in the embodiment shown in FIG. 7A, FIG. 7B, and FIG. 7C. For example,
the transceiver 1401 is configured to implement communication interaction with another device or network element connected to the sixth radio resource control network element (for example, an RRC), that is, configured to receive and send data. The processor 1402 is configured to perform another operation or function of the sixth radio resource control network element (for example, the RRC).

A person skilled in the art should understand that the embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, a CD-ROM, an optical memory, and the like) that include computer usable program code.

This application is described with reference to the flowcharts and/or block diagrams of the method, the device (system), and the computer program product according to the embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may also be stored in a computer-readable memory that can indicate the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may also be loaded onto the computer or any other programmable data processing device, so that a series of operations and steps are performed on the computer or any other programmable device, thereby generating computer-implemented processing. Therefore, the instructions executed on the computer or any other programmable device provide steps for implementing a specific function in one or more processes in the flowcharts and/or in one or more blocks in the block diagrams.

It is clear that a person skilled in the art can make various modifications and variations to the embodiments of this application without departing from the scope of the embodiments of this application. In this way, this application is intended to cover these modifications and variations of the embodiments of this application provided that they fall within the scope of protection defined by the following claims and their equivalent technologies.

## Claims

1. A network element selection method, comprising:
obtaining, by a first network element, first information of an access network element, wherein the first information is used to indicate a resource configuration level of the access network element;
obtaining, by the first network element, second information, wherein the second information comprises one or more of first priority information, second priority information, or third priority information, the first priority information is used to indicate a priority of a terminal device, the second priority information is used to indicate a service priority, and the third priority information is used to indicate a subscriber priority; and
determining, by the first network element based on the first information and the second information, the access network element to provide a service for the terminal device.

2. The method according to claim 1, wherein the obtaining, by the first network element, second information comprises:
receiving, by the first network element, the first priority information from a first radio resource control network element.

3. The method according to claim 2, wherein the determining, by the first network element based on the first information and the second information, the access network element to provide a service for a terminal device comprises:
if the first priority information is a high priority, and the first information indicates that resource configuration levels of a first packet data convergence protocol control plane function network element and a second radio resource control network element are high, determining, by the first network element, the first packet data convergence protocol control plane function network element and the second radio resource control network element to each provide a service for the terminal device.

4. The method according to claim 3, wherein the method further comprises:
sending, by the first network element, an identifier of the first packet data convergence protocol control plane function network element, an identifier of the second radio resource control network element, and redirection indication information to the first radio resource control network element, wherein the redirection indication information is used to indicate the first radio resource control network element to send the identifier of the first packet data convergence protocol control plane function network element and a radio resource control connection setup request of the terminal device to the second radio resource control network element; or
receiving, by the first network element, a radio resource control connection request of the terminal device from the first radio resource control network element, and sending, by the first network element, an identifier of the first packet data convergence protocol control plane function network element and the radio resource control connection request of the terminal device to the second radio resource control network element.

5. The method according to claim 1, wherein the obtaining, by the first network element, second information comprises:
obtaining, by the first network element, the third priority information from a unified data management function network element; or
obtaining, by the first network element, the third priority information from an access and mobility management function network element.

6. The method according to claim 5, wherein the determining, by the first network element based on the first information and the second information, the access network element to provide a service for a terminal device comprises:
if the third priority information is a high subscriber priority, and the first information indicates that resource configuration levels of a second packet data convergence protocol control plane function network element and a third radio resource control network element are high, determining, by the first network element, the second packet data convergence protocol control plane function network element and the third radio resource control network element to each provide a service for the terminal device.

7. The method according to claim 6, wherein the method further comprises:
sending, by the first network element, cause information to the terminal device by using a fifth radio resource control network element and a fourth packet data convergence protocol control plane function network element, wherein the cause information is used to indicate the terminal device to resend a radio resource control connection request that carries the high subscriber priority.

8. The method according to claim 1, wherein the obtaining, by the first network element, second information comprises:
receiving, by the first network element, the second priority information from an access and mobility management function network element.

9. The method according to claim 8, wherein the determining, by the first network element based on the first information and the second information, the access network element to provide a service for a terminal device comprises:
if the second priority information is a high service priority, and the first information indicates that a resource configuration level of a first service data adaptation protocol/packet data convergence protocol user plane function network element is high, determining, by the first network element, the first service data adaptation protocol/packet data convergence protocol user plane function network element to provide a service for the terminal device.

10. The method according to claim 1, wherein the obtaining, by the first network element, second information comprises:
obtaining, by the first network element, the first priority information or the third priority information from the first network element.

11. The method according to claim 10, wherein the determining, by the first network element based on the first information and the second information, the access network element to provide a service for a terminal device comprises:
if the first priority information is a high priority, and the first information indicates that a resource configuration level of a second service data adaptation protocol/packet data convergence protocol user plane function network element is high, determining, by the first network element, the second service data adaptation protocol/packet data convergence protocol user plane function network element to provide a service for the terminal device; or
if the third priority information is a high subscriber priority, and the first information indicates that a resource configuration level of a third service data adaptation protocol/packet data convergence protocol user plane function network element is high, determining, by the first network element, the third service data adaptation protocol/packet data convergence protocol user plane function network element to provide a service for the terminal device.

12. The method according to claim 9 or 11, wherein the method further comprises:
sending, by the first network element, an identifier of a determined service data adaptation protocol/packet data convergence protocol user plane function network element to a sixth radio resource control network element.

13. The method according to claim 1, wherein the obtaining, by the first network element, second information comprises:
determining, by the first network element, an identifier of a target cell to which the terminal device is to be handed over, and obtaining target priority information from the first network element based on the identifier of the target cell, wherein the target priority information is the first priority information, the second priority information, or the third priority information.

14. The method according to claim 13, wherein the determining, by the first network element based on the first information and the second information, the access network element to provide a service for a terminal device comprises:
determining, by the first network element based on the first information and the second information, a sixth packet data convergence protocol control plane function network element, a fifth service data adaptation protocol/packet data convergence protocol user plane function network element, and a seventh radio resource control network element to each provide a service for the terminal device.

15. A communications apparatus, wherein the communications apparatus is a first network element, and the apparatus comprises:
an obtaining module, configured to: obtain first information of an access network element, wherein the first information is used to indicate a resource configuration level of the access network element; and
obtain second information, wherein the second information comprises one or more of first priority information, second priority information, or third priority information, the first priority information is used to indicate a priority of a terminal device, the second priority information is used to indicate a service priority, and the third priority information is used to indicate a subscriber priority; and
a processing module, configured to determine, based on the first information and the second information, the access network element to provide a service for the terminal device.

16. The communications apparatus according to claim 15, wherein
the obtaining module is configured to receive the first priority information from a first radio resource control network element.

17. The communications apparatus according to claim 16, wherein the processing module is configured to:
if the first priority information is a high priority, and the first information indicates that resource configuration levels of a first packet data convergence protocol control plane function network element and a second radio resource control network element are high, determine the first packet data convergence protocol control plane function network element and the second radio resource control network element to each provide a service for the terminal device.

18. The communications apparatus according to claim 17, wherein the communications apparatus further comprises a sending module, and
the sending module is configured to send an identifier of the first packet data convergence protocol control plane function network element, an identifier of the second radio resource control network element, and redirection indication information to the first radio resource control network element, wherein the redirection indication information is used to indicate the first radio resource control network element to send the identifier of the first packet data convergence protocol control plane function network element and a radio resource control connection setup request of the terminal device to the second radio resource control network element; or
the obtaining module is further configured to receive a radio resource control connection request of the terminal device from the first radio resource control network element; and the sending module is configured to send an identifier of the first packet data convergence protocol control plane function network element and a radio resource control connection request of the terminal device to the second radio resource control network element.

19. The communications apparatus according to claim 15, wherein the obtaining module is configured to:
obtain the third priority information from a unified data management function network element; or
obtain the third priority information from an access and mobility management function network element.

20. The communications apparatus according to claim 19, wherein the processing module is configured to:
if the third priority information is a high subscriber priority, and the first information indicates that resource configuration levels of a second packet data convergence protocol control plane function network element and a third radio resource control network element are high, determine the second packet data convergence protocol control plane function network element and the third radio resource control network element to each provide a service for the terminal device.

21. The communications apparatus according to claim 20, wherein the communications apparatus further comprises:
a sending module, configured to send cause information to the terminal device by using a fifth radio resource control network element and a fourth packet data convergence protocol control plane function network element, wherein the cause information is used to indicate the terminal device to resend a radio resource control connection request that carries the high subscriber priority.

22. The communications apparatus according to claim 15, wherein
the obtaining module is configured to receive the second priority information from an access and mobility management function network element.

23. The communications apparatus according to claim 22, wherein the processing module is configured to:
if the second priority information is a high service priority, and the first information indicates that a resource configuration level of a first service data adaptation protocol/packet data convergence protocol user plane function network element is high, determine the first service data adaptation protocol/packet data convergence protocol user plane function network element to provide a service for the terminal device.

24. The communications apparatus according to claim 15, wherein
the obtaining module is configured to obtain the first priority information or the third priority information from the first network element.

25. The communications apparatus according to claim 24, wherein the processing module is configured to:
if the first priority information is a high priority, and the first information indicates that a resource configuration level of a second service data adaptation protocol/packet data convergence protocol user plane function network element is high, determine the second service data adaptation protocol/packet data convergence protocol user plane function network element to provide a service for the terminal device; or
if the third priority information is a high subscriber priority, and the first information indicates that a resource configuration level of a third service data adaptation protocol/packet data convergence protocol user plane function network element is high, determine the third service data adaptation protocol/packet data convergence protocol user plane function network element to provide a service for the terminal device.

26. The communications apparatus according to claim 23 or 25, wherein the communications apparatus further comprises:
a sending module, configured to send an identifier of a determined service data adaptation protocol/packet data convergence protocol user plane function network element to a sixth radio resource control network element.

27. The communications apparatus according to claim 15, wherein
the processing module is further configured to determine an identifier of a target cell to which the terminal device is to be handed over; and
the obtaining module is configured to obtain target priority information from the first network element based on the identifier of the target cell, wherein the target priority information is the first priority information, the second priority information, or the third priority information.

28. The communications apparatus according to claim 27, wherein the processing module is configured to:
determine, based on the first information and the second information, a sixth packet data convergence protocol control plane function network element, a fifth service data adaptation protocol/packet data convergence protocol user plane function network element, and a seventh radio resource control network element to each provide a service for the terminal device.

29. A computer-readable storage medium, comprising an instruction, wherein when the instruction is run on a computer, the computer is enabled to perform the method according to any one of claims 1 to 14.
